(19) Europäisches Patentamt
European Patent Office
Office européen des brevets

(11) **EP 4 761 441 A1**

(12) **EUROPEAN PATENT APPLICATION**
published in accordance with Art. 153(4) EPC

(43) Date of publication:
**17.06.2026 Bulletin 2026/25**

(21) Application number: **24863141.8**

(22) Date of filing: **02.09.2024**

(51) International Patent Classification (IPC):
*H04W 72/30* (2023.01)    *H04W 72/232* (2023.01)
*H04W 72/21* (2023.01)    *H04W 72/231* (2023.01)
*H04W 72/0446* (2023.01)    *H04W 56/00* (2009.01)
*H04L 1/1812* (2023.01)    *H04W 84/06* (2009.01)

(52) Cooperative Patent Classification (CPC):
**H04L 1/1812; H04W 56/00; H04W 72/0446;
H04W 72/21; H04W 72/231; H04W 72/232;
H04W 72/30; H04W 84/06**

(86) International application number:
**PCT/KR2024/013152**

(87) International publication number:
**WO 2025/053560 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 KR 20230119656**

(71) Applicant: **Samsung Electronics Co., Ltd.
Suwon-si, Gyeonggi-do 16677 (KR)**

(72) Inventors:
• **PARK, Sungjin
Suwon-si, Gyeonggi-do 16677 (KR)**
• **KIM, Youngbum
Suwon-si, Gyeonggi-do 16677 (KR)**
• **RYU, Hyunsuk
Suwon-si, Gyeonggi-do 16677 (KR)**
• **LEE, Jaewon
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND APPARATUS FOR TRANSMITTING/RECEIVING MULTICAST AND BROADCAST IN SATELLITE COMMUNICATION SYSTEM**

(57)    The present disclosure relates to a 5G or 6G communication system for supporting higher data transmission rates. The disclosure provides a method and an apparatus for performing uplink and downlink transmission if satellite communication is supported in a wireless communication system.

FIG. 10

Receive slot offset information through higher layer signal information — 1000

Receive control information for downlink data scheduling — 1010

Determine whether scheduled data is unicast or multicast, and determine HARQ-ACK feedback transmission resource through separate slot offset application according thereto — 1020

Transmit HARQ-ACK feedback information through PUCCH or PUSCH in determined HARQ-ACK transmission resource — 1030

**Description**

[Technical Field]

The disclosure relates to operations of a terminal and a base station in a satellite communication system. Specifically, the disclosure relates to a method of transmitting/receiving multicast and broadcast information in a satellite communication system, and an apparatus capable of performing same.

[Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands, (e.g., 60GHz bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discussion in the 5G communication systems. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems (5th generation communication system or new radio (NR)) to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

With the advance of wireless communication systems as described above, various services can be provided, and accordingly there is a need for ways to smoothly provide these services.

**[DISCLOSURE]**

[Technical Problem]

Embodiments set forth herein are to provide an apparatus and a method capable of effectively providing services in a mobile communication system.

Specifically, a method of effectively transmitting/receiving multicast and/or broadcast signals in a communication system using satellite communication and an apparatus capable of performing the same are proposed.

[Technical Solution]

To solve the above-described problems, the disclosure provides a method performed by a terminal in a communication system using a non-terrestrial network, the method including receiving cell-specific slot offset information from a base station, receiving terminal-specific slot offset information from the base station, receiving downlink control information for scheduling downlink data from the base station, determining, based on whether the downlink data is multicast data, a slot in which hybrid automatic repeat request-acknowledgement (HARQ-ACK) information for the downlink data is to be transmitted, and transmitting the HARQ-ACK information in the slot.

Alternatively, the disclosure provides a method performed by a base station in a communication system using a non-terrestrial network, the method including transmitting cell-specific slot offset information to a terminal, transmitting terminal-specific slot offset information to the terminal, transmitting downlink control information for scheduling downlink data to the terminal, and receiving hybrid automatic repeat request-acknowledgement (HARQ-ACK) information for the downlink data in a slot, wherein the slot is based on whether the downlink data is multicast data.

Alternatively, the disclosure provides a terminal in a communication system using a non-terrestrial network, the terminal including a transceiver, and a controller configured to receive cell-specific slot offset information from a base station, receive terminal-specific slot offset information from the base station, receive downlink control information for scheduling downlink data from the base station, determine, based on whether the downlink data is multicast data, a slot in which hybrid automatic repeat request-acknowledgement (HARQ-ACK) information for the downlink data is to be transmitted, and transmit the HARQ-ACK information in the slot.

Alternatively, the disclosure provides a base station in a communication system using a non-terrestrial network, the base station including a transceiver, and a controller configured to transmit cell-specific slot offset information to a terminal, transmit terminal-specific slot offset information to the terminal, transmit downlink control information for scheduling downlink data to the terminal, and receive hybrid automatic repeat request-acknowledgement (HARQ-ACK) information for the downlink data in a slot, wherein the slot is based on whether the downlink data is multicast data.

[Advantageous Effects]

Embodiments set forth herein provide an apparatus and a method capable of effectively providing services in a mobile communication system. In particular, based on at least one embodiment of the disclosure, multicast and/or broadcast signal transmission and reception may be efficiently performed in a system using satellite communication.

**[DESCRIPTION OF DRAWINGS]**

FIG. 1 illustrates a basic structure of a time-frequency domain, which is a radio resource domain used to transmit data or control channels, in a 5G system.
FIG. 2 illustrates an example of a structure of a frame, a subframe, and a slot in a 5G system.
FIG. 3 illustrates an example of a bandwidth part configuration in a 5G system.
FIG. 4 illustrates an example of a basic unit of time and frequency resources constituting a downlink control channel available in a 5G system.
FIG. 5 illustrates an example of a process in which a UE generates a Type-1 (semi-static) HARQ-ACK codebook in a 5G system.
FIG. 6 illustrates an example of a process in which a UE generates a Type-2 (dynamic) HARQ-ACK codebook in a 5G system.
FIG. 7 illustrates an example of an earth orbiting period of a communication satellite according to an altitude or height of the satellite according to an embodiment of the disclosure.
FIG. 8 illustrates an example of a process of information transmission and reception between a satellite and a UE in a non-terrestrial network according to an embodiment.
FIG. 9 illustrates an example in which a plurality of UEs receive a multicast PDSCH in satellite communication according to an embodiment of the disclosure and transmit HARQ-ACK feedback therefor.
FIG. 10 illustrates an example of a method in which a UE determines an uplink signal transmission slot according to reception of a downlink signal, according to an embodiment of the disclosure.
FIG. 11 illustrates an example of a method in which a base station determines an uplink signal reception slot according to reception of a downlink signal, according to an embodiment of the disclosure.
FIG. 12 illustrates an example of an operation in which a UE determines whether to report HARQ-ACK information, according to an embodiment of the disclosure.
FIG. 13 illustrates an example of an operation of a base station according to whether a UE reports HARQ-ACK information, according to an embodiment of the disclosure.
FIG. 14 illustrates a structure of a UE in a wireless communication system according to an embodiment of the disclosure.
FIG. 15 illustrates a structure of a base station in a wireless communication system according to an embodiment of the disclosure.

## [MODE FOR INVENTION]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a cellular phone, a smartphone, a computer, a subscriber station, a remote terminal, a wireless terminal, a receive point, a user device, or a multimedia system capable of performing a communication function. For the sake of convenience, the term "terminal" is used to indicate a device that accesses a base station in various embodiments of the disclosure, regardless of whether the terminal is a mobile device (such as a mobile phone or a smartphone) or is considered a stationary device (e.g., a desktop computer or a vending machine).

In the disclosure, a "downlink (DL)" refers to a radio link via which a base station transmits a signal to a terminal, and an "uplink (UL)" refers to a radio link via which a terminal transmits a signal to a base station. In the following description of embodiments of the disclosure, 5G communication systems will be described by way of example, but the embodiments of the disclosure may also be applied to other communication systems having similar technical backgrounds or channel types to the embodiments of the disclosure. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink and employs a single carrier frequency division multiple access (SC-FDMA) scheme in an uplink. The above multiple access scheme may separate data or control information of respective users by allocating and operating time-frequency resources for carrying the data or control information for each user so as to avoid overlapping therebetween, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, the 5G system is not limited to the three services described above.

Hereinafter, a frame structure of a 5G system will be described in more detail with reference to the accompanying drawings.

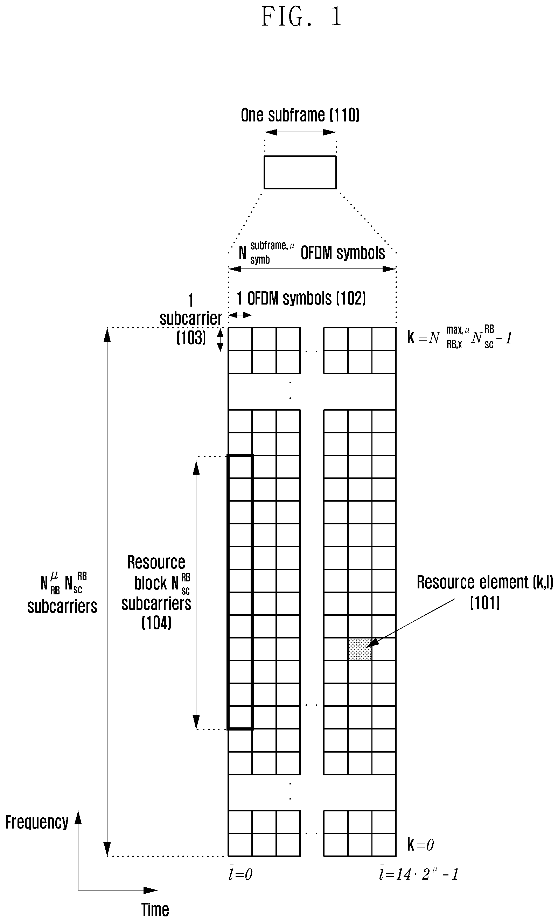

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104.

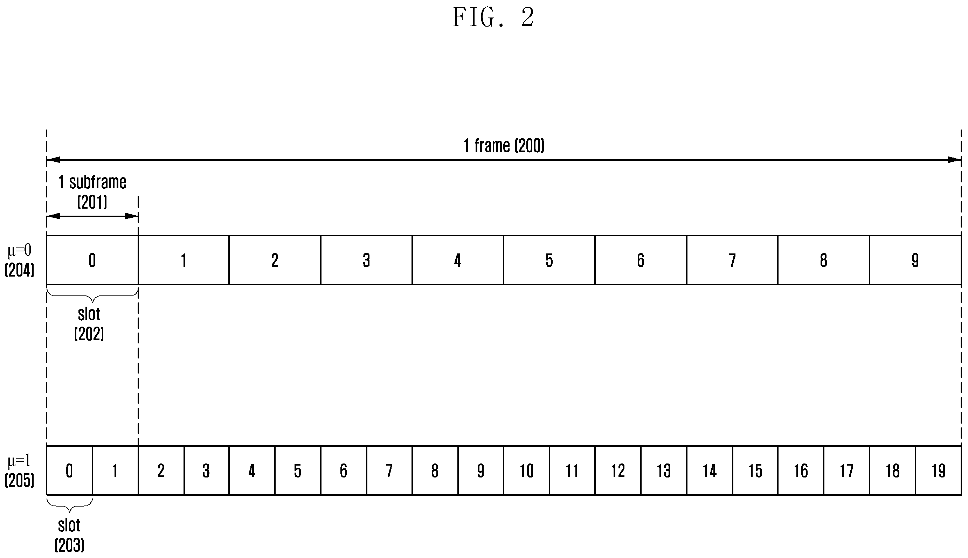

FIG. 2 illustrates an example of a structure of a frame, a subframe, and a slot in a 5G system.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values μ for the subcarrier spacing 204 or 205. The example of FIG. 2 shows the case of μ=0 (2-04) and the case of μ=1 (2-05) as a configuration value for a subcarrier spacing. In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in a 5G communication system will be described in detail with reference to the accompanying drawings.

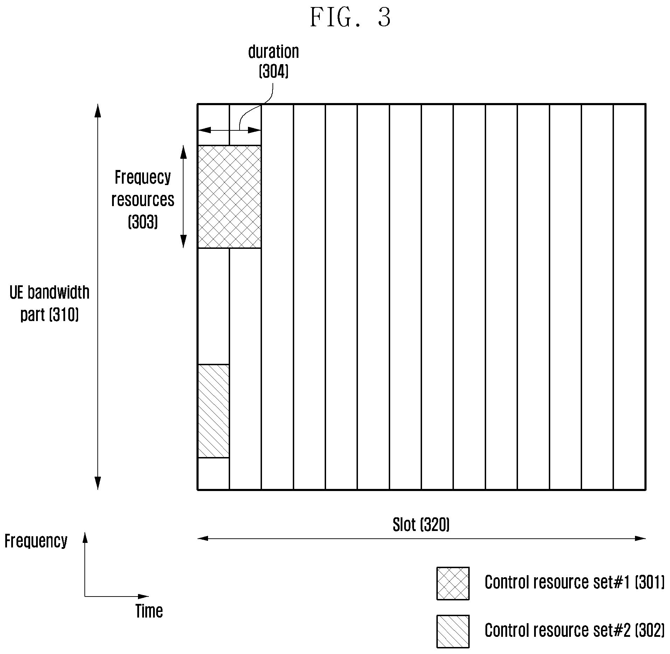

FIG. 3 illustrates an example of a bandwidth part configuration in a 5G system.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

| BWP ::= | SEQUENCE { |
|---|---|
| bwp-Id<br>(bandwidth part identifier) | BWP-Id, |
| locationAndBandwidth<br>(bandwidth part location) | INTEGER (1..65536), |
| subcarrierSpacing<br>n1, n2, n3, n4, n5},<br>(subcarrier spacing) | ENUMERATED {n0, |
| cyclicPrefix<br>extended }<br>(cyclic prefix)<br>} | ENUMERATED { |

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

Next, synchronization signal (SS)/PBCH blocks in a 5G system will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and control resource set #0 may be configured for the UE from the MIB. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 3 below, for example.

[Table 3]

| |
|---|
| - Identifier for DCI formats - [1] bit |
| - Frequency domain resource assignment - $\lceil \log_2(N_{RB}^{UL,BWP}(N_{RB}^{UL,BWP}+1)/2) \rceil$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 4 below, for example.

[Table 4]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| For resource allocation type 0, $\lceil N_{RB}^{UL,\ BWP} / P \rceil$ bits |
| For resource allocation type 1, $\lceil \log_2(N_{RB}^{UL,\ BWP}(N_{RB}^{UL,\ BWP}+1)/2) \rceil$ bits |
| - Time domain resource assignment -1, 2, 3, or 4 bits |
| - Virtual resource block (VRB)-to-physical resource block (PRB) mapping - 0 or 1 bit, only for resource allocation type 1. |
| ∘ 0 bit if only resource allocation type 0 is configured; |
| ∘ 1 bit otherwise. |
| - Frequency hopping flag - 0 or 1 bit, only for resource allocation type 1. |
| ∘ 0 bit if only resource allocation type 0 is configured; |
| ∘ 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |
| ∘ 1 bit for semi-static HARQ-ACK codebook; |
| ∘ 2 bits for dynamic HARQ-ACK codebook with single HARQ-ACK codebook. |
| - 2nd downlink assignment index - 0 or 2 bits |
| ∘ 2 bits for dynamic HARQ-ACK codebook with two HARQ-ACK sub-codebooks; |
| ∘ 0 bit otherwise. |
| - TPC command for scheduled PUSCH - 2 bits |
| - SRS resource indicator - $\left\lceil \log_2\left( \sum_{k=1}^{L_{max}} \binom{N_{SRS}}{k} \right) \right\rceil$ or $\lceil \log_2(N_{SRS}) \rceil$ bits |

(continued)

$$\ast\ \left\lceil \log_2\left( \sum_{k=1}^{L_{\max}} \binom{N_{\mathrm{SRS}}}{k} \right) \right\rceil \quad \text{bits for non-codebook based PUSCH transmission;}$$

$$\ast\ \left\lceil \log_2\left( N_{\mathrm{SRS}} \right) \right\rceil \quad \text{bits for codebook based PUSCH transmission.}$$

- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- Demodulation reference signal (DMRS) sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 5 below, for example.

[Table 5]

- Identifier for DCI formats - [1] bit

- Frequency domain resource assignment - $\left[ \left\lceil \log_2 \left( N_{\mathrm{RB}}^{\mathrm{DL,\ BWP}} \left( N_{\mathrm{RB}}^{\mathrm{DL,\ BWP}} + 1 \right) / 2 \right) \right\rceil \right]$ bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 6 below, for example.

[Table 6]

- Carrier indicator - 0 or 3 bits
- Identifier for DCI formats - [1] bits
- Bandwidth part indicator - 0, 1 or 2 bits
- Frequency domain resource assignment

∘ For resource allocation type 0, $\left\lceil N_{\mathrm{RB}}^{\mathrm{DL,\ BWP}} / P \right\rceil$ bits

∘ For resource allocation type 1, $\left\lceil \log_2 \left( N_{\mathrm{RB}}^{\mathrm{DL,\ BWP}} \left( N_{\mathrm{RB}}^{\mathrm{DL,\ BWP}} + 1 \right) / 2 \right) \right\rceil$ bits

- Time domain resource assignment -1, 2, 3, or 4 bits

(continued)

| |
| --- |
| - VRB-to-PRB mapping - 0 or 1 bit, only for resource allocation type 1. |
| ◦ 0 bit if only resource allocation type 0 is configured; |
| o 1 bit otherwise. |
| - Physical resource block (PRB) bundling size indicator - 0 or 1 bit |
| - Rate matching indicator - 0, 1, or 2 bits |
| - Zero power (ZP) channel state information (CSI)-reference signal (RS) trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ _feedback timing indicator - 3 bits |
| - Antenna ports - 4, 5 or 6 bits |
| - Transmission configuration indication - 0 or 3 bits |
| - SRS request - 2 bits |
| - Code block group (CBG) transmission information - 0, 2, 4, 6, or 8 bits |
| - CBG flushing out information - 0 or 1 bit |
| - DMRS sequence initialization - 1 bit |

Hereinafter, a downlink control channel in a 5G communication system will be described in more detail with reference to the accompanying drawings.

FIG. 3 illustrates an example of a control resource set used to transmit a downlink control channel in a 5G system. FIG. 3 illustrates an example in which a UE bandwidth part 310 is configured along the frequency axis, and two control resource sets (control resource set #1 301 and control resource set #2 302) are configured within one slot 320 along the time axis. The control resource sets 301 and 302 may be configured in a specific frequency resource 310 within the entire UE bandwidth part 303 along the frequency axis. The control resource sets 301 and 302 may be each configured as one or multiple OFDM symbols along the time domain, and the number of the OFDM symbols may be defined as a control resource set duration 304. Referring to the example illustrated in FIG. 3, control resource set #1 301 is configured to have a control resource set duration corresponding to two symbols, and control resource set #2 302 is configured to have a control resource set duration corresponding to one symbol.

A control resource set in the 5G system described above may be configured for a UE by a base station through higher layer signaling (e.g., system information, master information block (MIB), radio resource control (RRC) signaling). The description that a control resource set is configured for a UE means that information such as a control resource set identity, the control resource set's frequency location, and the control resource set's symbol duration is provided. For example, the control resource set configuration may include the following pieces of information given in Table 7 below.

[Table 7]

```
ConControlResourceSet ::=                                    SEQUENCE
{
        -- Corresponds to L1 parameter 'CORESET-ID'


        controlResourceSetId
        ControlResourceSetId,
    (control resource set identity)
        frequencyDomainResources                          BIT  STRING
(SIZE (45)),
    (frequency domain resource assignment information)
        duration
        INTEGER (1..maxCoReSetDuration),
    (time domain resource assignment information)
        cce-REG-MappingType
        CHOICE {
    (CCE-to-REG mapping type)
            interleaved
        SEQUENCE {


            reg-BundleSize
        ENUMERATED {n2, n3, n6},
    (REG bundle size)


            precoderGranularity
        ENUMERATED {sameAsREG-bundle, allContiguousRBs},


            interleaverSize
        ENUMERATED {n2, n3, n6}
            (interleaver size)
```

```
                    shiftIndex

            INTEGER(0..maxNrofPhysicalResourceBlocks-1)

                                    OPTIONAL

            (interleaver shift)

        },

            nonInterleaved                                    NULL

        },

        tci-StatesPDCCH

        SEQUENCE(SIZE (1..maxNrofTCI-StatesPDCCH)) OF TCI-StateId

                                    OPTIONAL,

    (QCL configuration information)

        tci-PresentInDCI

        ENUMERATED {enabled}

                            OPTIONAL,   … Need S

    }
}
```

In Table 7, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

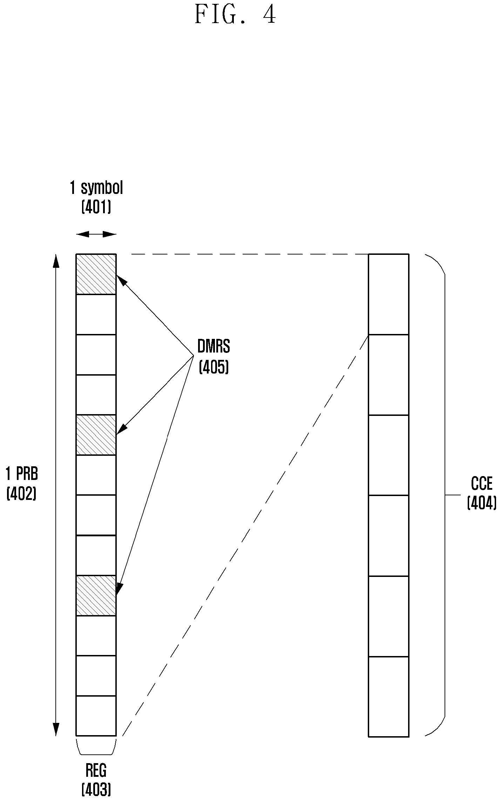

FIG. 4 illustrates an example of a basic unit of time and frequency resources constituting a downlink control channel available in a 5G system.

According to FIG. 4, the basic unit of time and frequency resources constituting a control channel may be referred to as a resource element group (REG) 403, and the REG 403 may be defined by one OFDM symbol 401 along the time axis and one physical resource block (PRB) 402, that is, 12 subcarriers, along the frequency axis. The base station may configure a downlink control channel allocation unit by concatenating the REGs 403.

Provided that the basic unit of downlink control channel allocation in 5G is a control channel element 404 as illustrated in FIG. 4, one CCE 404 may include multiple REGs 403. To describe the REG 403 illustrated in FIG. 4, for example, the REG 403 may include 12 REs, and if one CCE 404 includes six REGs 403, one CCE 404 may then include 72 REs. A downlink control resource set, once configured, may include multiple CCEs 404, and a specific downlink control channel may be mapped to one or multiple CCEs 404 and then transmitted according to the aggregation level (AL) in the control resource set. The CCEs 404 in the control resource set are distinguished by numbers, and the numbers of CCEs 404 may be allocated according to a logical mapping scheme.

The basic unit of the downlink control channel illustrated in FIG. 4, that is, the REG 403, may include both REs to which DCI is mapped, and an area to which a reference signal (DMRS 405) for decoding the same is mapped. As in FIG. 4, three DRMSs 403 may be transmitted inside one REG 405. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, parameters for a search space regarding a PDCCH may be configured for the UE by the base station through higher layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set configuration may include the following pieces of information given in Table 8 below.

[Table 8]

| |
|---|
| SearchSpace ::=                                              SEQUENCE { |
|         -- Identity of the search space. SearchSpaceId = 0 identifies the SearchSpace configured via PBCH (MIB) or ServingCellConfigCommon. |
|         searchSpaceId |
|         SearchSpaceId, |
|     (search space identity) |
|         controlResourceSetId |
|         ControlResourceSetId, |
|     (control resource set identity) |
|         monitoringSlotPeriodicityAndOffset           CHOICE { |
|     (monitoring slot level periodicity) |
|             sl1 |
|             NULL, |
|             sl2 |
|             INTEGER (0..1), |

```
            sl4

            INTEGER (0..3),

            sl5

        INTEGER (0..4),

            sl8

            INTEGER (0..7),

            sl10

        INTEGER (0..9),

            sl16

        INTEGER (0..15),

            sl20

        INTEGER (0..19)

            }

                                                    OPTIONAL,

    duration (monitoring duration)        INTEGER (2..2559)

            monitoringSymbolsWithinSlot                            BIT
STRING (SIZE (14))

                                                    OPTIONAL,

    (monitoring symbols within slot)

            nrofCandidates

            SEQUENCE {

    (number of PDCCH candidates for each aggregation level)

            aggregationLevel1

        ENUMERATED {n0, n1, n2, n3, n4, n5, n6, n8},

            aggregationLevel2

        ENUMERATED {n0, n1, n2, n3, n4, n5, n6, n8},

            aggregationLevel4

        ENUMERATED {n0, n1, n2, n3, n4, n5, n6, n8},

            aggregationLevel8

        ENUMERATED {n0, n1, n2, n3, n4, n5, n6, n8},
```

```
            aggregationLevel16

            ENUMERATED {n0, n1, n2, n3, n4, n5, n6, n8}

            },


            searchSpaceType

            CHOICE {

            (search space type)

                    -- Configures this search space as common search space (CSS)

and DCI formats to monitor.

                    common

                    SEQUENCE {

            (common search space)

                }

                    ue-Specific

            SEQUENCE {

            (UE-specific search space)

                        -- Indicates whether the UE monitors in this USS for

DCI formats 0-0 and 1-0 or for formats 0-1 and 1-1.

                        formats

                        ENUMERATED  {formats0-0-And-1-0,  formats0-1-

And-1-1},

                    ...

                }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI

- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 9 below.

[Table 9]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In a 5G system, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set $p$
- $n_{s,f}^{\mu}$ : slot index

- $M_{s,max}^{(L)}$ number of PDCCH candidates at aggregation level L

- $m_{s,n_{CI}} = 0, \ldots, M_{s,max}^{(L)} - 1$ : PDCCH candidate index at aggregation level L

- $i = 0, \ldots, L - 1$

- $Y_{p,n_{s,f}^{\mu}} = \left( A_p \cdot Y_{p,n_{s,f}^{\mu} - 1} \right) mod\ D$ , $Y_{p,-1} = n_{RNTI} \neq 0$ , $A_p = 39827$ *for pmod* 3 = 0, $A_p = 39829$ *for pmod* 3 = 1, $A_p = 39839$ *for pmod* 3 = 2, D = 65537

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 10), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

Next, a PDSCH processing time (PDSCH processing procedure time) will be described. If the base station schedules the UE to transmit a PDSCH by using DCI format 1_0, 1_1 or 1_2, the UE may need a PDSCH processing time for receiving a PDSCH by applying a transmission method (modulation/demodulation and coding indication index (MCS), demodulation reference signal-related information, time and frequency resource allocation information, and the like) indicated through DCI. The PUSCH preparation procedure time is defined in NR in consideration thereof. The PUSCH processing time of the UE may follow Equation 2 given below.

[Equation 2]

$$T_{proc,1} = (\ N_1 + d_{1,1} + d_2)(\ 2048\ +\ 144\ )\ \kappa 2^{-\mu}\ T_c\ +\ T_{ext}$$

Each parameter in $T_{proc,1}$ described above in Equation 2 may have the following meaning.

- $N_1$: the number of symbols determined according to UE processing capability 1 or 2 based on the UE's capability and numerology $\mu$. $N_1$ may have a value in Table 10 if UE processing capability 1 is reported according to the UE's capability report, and may have a value in Table 11 if UE processing capability 2 is reported, and if availability of UE processing capability 2 is configured through higher layer signaling. The numerology $\mu$ may correspond to the minimum value among $\mu_{PDCCH}$, $\mu_{PDSCH}$, $\mu_{UL}$ so as to maximize $T_{proc,1}$, and $\mu_{PDCCH}$, $\mu_{PDSCH}$, $\mu_{UL}$ may refer to the numerology of a PDCCH that scheduled a PDSCH, the numerology of the scheduled PDSCH, and numerology of an uplink channel in which a hybrid automatic repeat request-acknowledgement (HARQ-ACK) is to be transmitted.

Table 10 shows the PDSCH processing time in the case of PDSCH processing capability 1, and Table 11 shows the PDSCH processing time in the case of PDSCH processing capability 2

[Table 10]

| $\mu$ | PDSCH decoding time $N_1$ [symbols] | |
|---|---|---|
| | If PDSCH mapping type A and B both correspond to dmrs-AdditionalPosition = pos0 inside DMRS-DownlinkConfig which is higher layer signaling | If PDSCH mapping type A and B both do not correspond to dmrs-AdditionalPosition = pos0 inside DMRS-DownlinkConfig which is higher layer signaling, or if no higher layer parameter is configured |
| 0 | 8 | $N_{1,0}$ |
| 1 | 10 | 13 |
| 2 | 17 | 20 |

(continued)

| μ | PDSCH decoding time $N_1$ [symbols] | |
|---|---|---|
| | If PDSCH mapping type A and B both correspond to dmrs-AdditionalPosition = pos0 inside DMRS-DownlinkConfig which is higher layer signaling | If PDSCH mapping type A and B both do not correspond to dmrs-AdditionalPosition = pos0 inside DMRS-DownlinkConfig which is higher layer signaling, or if no higher layer parameter is configured |
| 3 | 20 | 24 |

[Table 11]

| μ | PDSCH decoding time $N_1$ [symbols] |
|---|---|
| | If PDSCH mapping type A and B both correspond to dmrs-AdditionalPosition = pos0 inside DMRS-DownlinkConfig which is higher layer signaling |
| 0 | 3 |
| 1 | 4.5 |
| 2 | 9 for frequency range 1 |

- κ: 64

$T_{ext}$: if the UE uses a shared spectrum channel access scheme, the UE may calculate $T_{ext}$ and apply the same to the PDSCH processing time. Otherwise, $T_{ext}$ is assumed to be 0.

- If $1_1$ which represents the PDSCH DMRS location value is 12, $N_{1,0}$ in Table 10 above has the value of 14, and otherwise has the value of 13.
- With regard to PDSCH mapping type A, if the last symbol of the PDSCH is the ith symbol in the slot in which the PDSCH is transmitted, and if i<7, $d_{1,1}$ is then 7-i, and $d_{1,1}$ is otherwise 0.
- $d_2$: if a PUCCH having a high priority index temporally overlaps another PUCCH or a PUSCH having a low priority index, $d_2$ of the PUCCH having a high priority index may be configured as a value reported from the UE. Otherwise, $d_2$ is 0.
- If PDSCH mapping type B is used with regard to UE processing capability 1, the $d_{1,1}$ value may be determined by the number (L) of symbols of a scheduled PDSCH and the number of overlapping symbols between the PDCCH that schedules the PDSCH and the scheduled PDSCH, as follows.
- If $L \geq 7$, then $d_{1,1} = 0$.
- If $- L \geq 4$ and $L \leq 6$, then $d_{1,1} = 7 - L$.
- If L = 3, then $d_{1,1} = \min (d, 1)$.
- If L=2, then $d_{1,1} = 3 + d$.
- If PDSCH mapping type B is used with regard to UE processing capability 2, the $d_{1,1}$ value may be determined by the number (L) of symbols of a scheduled PDSCH and the number of overlapping symbols between the PDCCH that schedules the PDSCH and the scheduled PDSCH, as follows.
- If $L \geq 7$, then $d_{1,1} = 0$.
- If $- L \geq 4$ and $L \leq 6$, then $d_{1,1} = 7 - L$.
- If L=2,
- If the scheduling PDCCH exists inside a CORESET including three symbols, and if the CORESET and the scheduled PDSCH have the same start symbol, then $d_{1,1} = 3$.
- Otherwise, $d_{1,1} = d$.
- In the case of a UE supporting capability 2 inside a given serving cell, the PDSCH processing time based on UE processing capability 2 may be applied by the UE if processingType2Enabled (higher layer signaling) is configured as "enable" with regard to the corresponding cell.

If the location of the first uplink transmission symbol of a PUCCH including HARQ-ACK information (in connection with the corresponding location, $K_1$ defined as the HARQ-ACK transmission timepoint, a PUCCH resource used to transmit the HARQ-ACK, and the timing advance effect may be considered) does not start earlier than the first uplink transmission symbol that comes after the last symbol of the PDSCH over a time of $T_{proc,1}$, the UE needs to transmit a valid HARQ-ACK message. That is, the UE needs to transmit a PUCCH including a HARQ-ACK only if the PDSCH processing time is sufficient. The UE cannot otherwise provide the base station with valid HARQ-ACK information corresponding to the scheduled PDSCH. The aforementioned $T_{proc,1}$ may be used in the case of both a normal and an extended CP. In the case of a PDSCH having two PDSCH transmission locations configured inside one slot, $d_{1,1}$ is calculated with reference to the first PDSCH transmission location inside the corresponding slot.

Next, in the case of cross-carrier scheduling in which the numerology ($\mu_{PDCCH}$) by which a scheduling PDCCH is transmitted and the numerology ($\mu_{PDSCH}$) by which a PDSCH scheduled by the corresponding PDCCH is transmitted are different from each other, the PDSCH reception reparation time ($N_{pdsch}$) of the UE defined with regard to the time interval between the PDCCH and PDSCH will be described. $N_{pdsch}$ may be as given in Table 12 below.

If $\mu_{PDCCH} < \mu_{PDSCH}$, the scheduled PDSCH cannot be transmitted before the first symbol of the slot coming after $N_{pdsch}$ symbols from the last symbol of the PDCCH that scheduled the corresponding PDSCH. The transmission symbol of the corresponding PDSCH may include a DM-RS.

If $\mu_{PDCCH} > \mu_{PDSCH}$, the scheduled PDSCH may be transmitted after $N_{pdsch}$ symbols from the last symbol of the PDCCH that scheduled the corresponding PDSCH. The transmission symbol of the corresponding PDSCH may include a DM-RS.

Table 12 describes $N_{pdsch}$ according to scheduled PDCCH subcarrier spacing

[Table 12]

| $\mu_{PDCCH}$ | $N_{pdsch}$ [symbols] |
|---|---|
| 0 | 4 |
| 1 | 5 |
| 2 | 10 |
| 3 | 14 |

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In the 5G system, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request, the UE configures band combinations (BCs) regarding EN-DC and NR standalone (SA). That is, the UE configures a candidate list of BCs regarding EN-DC and NR SA, based on bands received from the base station at a request through FreqBandList. Bands have priority in the order described in FreqBandList.

2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE selects BCs appropriate for the requested RAT type from the final "candidate BC list" and configures BCs to report. In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

Hereinafter, a method for generating a type 1 (semi-static) codebook for HARQ-ACK reporting will be described.

In a situation where the number of HARQ-ACK PUCCHs transmittable by a UE in one slot is limited to one, upon receiving a higher configuration of a semi-static HARQ-ACK codebook, the UE reports HARQ-ACK information for PDSCH reception or SPS PDSCH release within the HARQ-ACK codebook in a slot indicated by the value of a PDSCH-to-HARQ feedback timing indicator in DCI format 1_0 or DCI format 1_1. The UE reports an HARQ-ACK information bit value within the HARQ-ACK codebook via an NACK in a slot not indicated by a PDSCH-to-HARQ feedback timing indicator field in DCI format 1_0 or DCI format 1_1. If the UE reports only HARQ-ACK information regarding one PDSCH reception or one SPS PDSCH release in MAC occasions for candidate PDSCH reception, and if the report is scheduled by DCI format 1_0 including information in which a counter DAI field in the Pcell indicates 1, the UE determines one HARQ-ACK codebook for the corresponding SPS PDSCH release or corresponding PDSCH reception.

Otherwise, the HARQ-ACK codebook determination method follows the method described below in detail.

If a set of PDSCH reception candidate occasions in serving cell c is MA,c, MA,c may be obtained through the following [pseudo-code 1] steps.

[Start pseudo-code 1]

- Step 1: Initialize j to 0, and initialize MA,c to an empty set. Initialize k, which is an HARQ-ACK transmission timing index, to 0.
- Step 2: Configure R as a set of rows in a table including information on a slot to which a PDSCH is mapped, information on a start symbol, and information on the number or length of symbols. If a PDSCH-available mapping symbol indicated by each value of R according to DL and UL configurations configured via a higher layer is configured as a UL symbol, remove the corresponding row from R.
- Step 3-1: If the UE is able to receive one PDSCH for unicast in one slot and R is not an empty set, add one PDSCH to set MA,c.
- Step 3-2: If the UE is able to receive two or more PDSCHs for unicast in one slot, count the number of PDSCHs allocatable in different symbols from the calculated R, and add as many PDSCHs as the counted number to MA,c.
- Step 4: Increase k by one and start from step 2 again.

[End of pseudo-code 1]

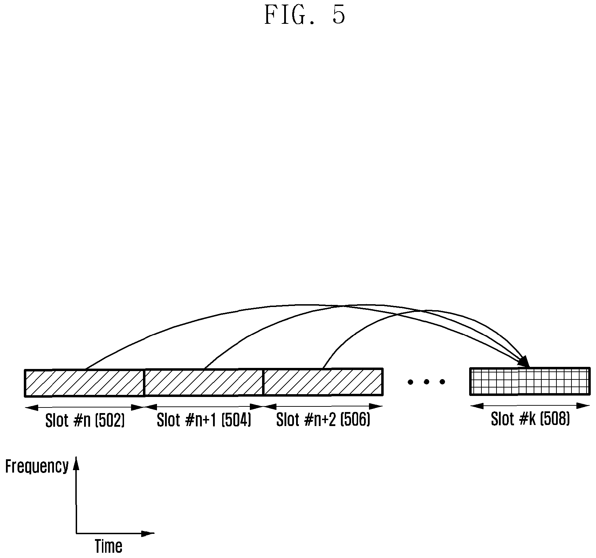

FIG. 5 illustrates an example of a process in which a UE generates a Type-1 (semi-static) HARQ-ACK codebook in a 5G system. For example, with reference to pseudo-code 1 illustrated in FIG. 5, in order to perform HARQ-ACK PUCCH transmission in slot#k 508, all of slot candidates having PDSCH-to-HARQ timing capable of indicating slot#k 508 are considered. In FIG. 5, it is assumed that HARQ-ACK transmission in slot #k 508 is possible only by PDSCH-to-HARQ timing combinations corresponding to PDSCHs scheduled in slot #n 502, slot #(n+1) 504, and slot #(n+2) 506. In addition, for each of slots 502, 504, and 506, a maximum number of PDSCHs schedulable in each slot is derived by considering time-domain resource configuration information of a PDSCH schedulable in each slot and information indicating whether symbols in the slot are downlink or uplink. For example, in case that a maximum number of PDSCHs schedulable in slot 502 is 2, in slot 504 is 3, and in slot 506 is 2, a maximum number of PDSCHs included in the HARQ-ACK codebook transmitted in slot 508 is 7 in total. This number is referred to as a cardinality of the HARQ-ACK codebook.

Operation 3-2 within a specific slot is described in detail with reference to Table 13 below. Table 13 is default PDSCH time domain resource allocation A for normal CP.

[Table 13]

| Row index | dmrs-TypeA-Position | PDSCH mapping type | $K_0$ | S | L | Ending | Order |
|---|---|---|---|---|---|---|---|
| 1 | 2 | Type A | 0 | 2 | 12 | 13 | 1x |
|   | 3 | Type A | 0 | 3 | 11 | 13 | 1x |
| 2 | 2 | Type A | 0 | 2 | 10 | 11 | 1x |
|   | 3 | Type A | 0 | 3 | 9 | 11 | 1x |
| 3 | 2 | Type A | 0 | 2 | 9 | 10 | 1x |
|   | 3 | Type A | 0 | 3 | 8 | 10 | 1x |
| 4 | 2 | Type A | 0 | 2 | 7 | 8 | 1x |
|   | 3 | Type A | 0 | 3 | 6 | 8 | 1x |
| 5 | 2 | Type A | 0 | 2 | 5 | 6 | 1x |
|   | 3 | Type A | 0 | 3 | 4 | 6 | 1x |
| 6 | 2 | Type B | 0 | 9 | 4 | 12 | 2x |
|   | 3 | Type B | 0 | 10 | 4 | 13 | 3 |
| 7 | 2 | Type B | 0 | 4 | 4 | 7 | 1x |
|   | 3 | Type B | 0 | 6 | 4 | 9 | 2 |
| 8 | 2,3 | Type B | 0 | 5 | 7 | 11 | 1x |
| 9 | 2,3 | Type B | 0 | 5 | 2 | 6 | 1x |
| 10 | 2,3 | Type B | 0 | 9 | 2 | 10 | 2x |
| 11 | 2,3 | Type B | 0 | 12 | 2 | 13 | 3x |
| 12 | 2,3 | Type A | 0 | 1 | 13 | 13 | 1x |
| 13 | 2,3 | Type A | 0 | 1 | 6 | 6 | 1x |
| 14 | 2,3 | Type A | 0 | 2 | 4 | 5 | 1 |
| 15 | 2,3 | Type B | 0 | 4 | 7 | 10 | 1x |
| 16 | 2,3 | Type B | 0 | 8 | 4 | 11 | 2x |

Table 13 shows a time resource allocation table for a UE to operate by default before the UE receives a time resource allocation via a separate RRC signal. For reference, in addition to the row index value being indicated separately via an RRC signal, a PDSCH time resource allocation value is determined by dmrs-TypeA-Position, which is a UE-common RRC signal. In table 13, an ending column and an order column are values added separately for convenience of description, and may not actually exist. The ending column indicates an end symbol of a scheduled PDSCH, and the order column indicates a code position value within a specific codebook in a semi-static HARQ-ACK codebook. The table is applied to time domain resource allocation for DCI format 1_0 in a common search space of a PDCCH.

In order to determine an HARQ-ACK codebook, a UE calculates a maximum number of non-overlapping PDSCHs within a specific slot, and to this end, the UE performs the following operations.

* Operation 1: A PDSCH allocation value that ends first within a slot is discovered among all rows in a PDSCH time resource allocation table. As shown in Table 13, a row index 14 is identified as ending first. This row index is indicated as "1" in an order column. In addition, other row indexes that overlap with the row index 14 in at least one symbol are indicated as "1x" in the order column.
* Operation 2: Then, among the remaining row indexes not indicated in the order column, a PDSCH allocation value that ends first within the slot is discovered. In Table 13, a row having a row index of 7 and a dmrs-TypeA-Position value of 3 corresponds thereto. Other row indexes that overlap with the corresponding row index in at least one symbol are indicated as "2x" in the order column.
* Operation 3: Operation 2 is repeated and an order value is incremented and indicated. For example, among the row indexes not indicated in the order column in Table 13, a PDSCH allocation value that ends first within the slot is discovered. In Table 13, a row having a row index of 6 and a dmrs-TypeA-Position value of 3 corresponds thereto. Moreover, other row indexes overlapping the corresponding row index in at least one symbol are indicated as "3x" in the order column.

\* Operation 4: When order values are indicated for all row indexes, the process is terminated. A size of the order corresponds to a maximum number of PDSCHs that can be scheduled without time overlap within the corresponding slot. Scheduling without time overlap means that different PDSCHs are scheduled in a TDM manner.

In the "order" column of Table 13, the maximum value of "order" represents a size of a HARQ-ACK codebook for a corresponding slot, and an order value represents a HARQ-ACK codebook point at which a HARQ-ACK feedback bit for a corresponding scheduled PDSCH is located. For example, row index 16 of Table 13 indicates that a HARQ-ACK feedback bit corresponding to the PDSCH is located at a second code position in a semi-static HARQ-ACK codebook having a size of3. When a UE transmits HARQ-ACK feedback, the UE may obtain a set $M_{A,c}$ of occasions for candidate PDSCH receptions in a serving cell c by following the operations of [pseudo-code 1] or [pseudo-code 2] below. MA,c may be used to determine the number of HARQ-ACK bits to be transmitted by the UE. Specifically, the HARQ-ACK codebook may be configured using the cardinality of the set MA,c.

As another example, considerations to be taken account for determining a semi-static HARQ-ACK codebook (or a type 1 HARQ-ACK codebook) may include the following.

a) on a set of slot timing values K1 associated with the active UL BWP

(a) If the UE is configured to monitor PDCCH for DCI format 1_0 and is not configured to monitor PDCCH for DCI format 1_1 on serving cell c, $K_1$ is provided by the slot timing values {1, 2, 3, 4, 5, 6, 7, 8} for DCI format 1_0

(b) If the UE is configured to monitor PDCCH for DCI format 1_1 for serving cell c, $K_1$ is provided by dl-DataToUL-ACK for DCI format 1_1

b) on a set of row indexes R of a table that is provided either by a first set of row indexes of a table that is provided by PDSCH-TimeDomainResourceAllocationList in PDSCH-ConfigCommon or by Default PDSCH time domain resource allocation A [6, TS 38.214], or by the union of the first set of row indexes and a second set of row indexes, if provided by PDSCH-TimeDomainResourceAllocationList in PDSCH-Config, associated with the active DL BWP and defining respective sets of slot offsets $K_0$, start and length indicators SLIV, and PDSCH mapping types for PDSCH reception as described in [6, TS 38.214]

c) on the ratio between the downlink SCS configuration $\mu_{DL}$ and the uplink SCS configuration $\mu_{UL}$ provided by subcarrierSpacing in BWP-Downlink and BWP-Uplink for the active DL BWP and the active UL BWP, respectively

d) if provided, on TDD-UL-DL-ConfigurationCommon and TDD-UL-DL-ConfigDedicated as described in Subclause 11.1.

Another example of the pseudo-code for HARQ-ACK codebook determination may be as follows.

[Start of pseudo-code 2]

For the set of slot timing values $K_1$, the UE determines a set of $M_{A,c}$ occasions for candidate PDSCH receptions or SPS PDSCH releases according to the following pseudo-code. A location in the Type-1 HARQ-ACK codebook for HARQ-ACK information corresponding to a SPS PDSCH release is same as for a corresponding SPS PDSCH reception.

Set $j = 0$ - index of occasion for candidate PDSCH reception or SPS PDSCH release

Set $B = \varnothing$

Set $M_{A,c} = \varnothing$

Set $\mathcal{C}(K_1)$ to the cardinality of set $K_1$

Set $k = 0$ – index of slot timing values $K_{1,k}$, in descending order of the slot timing

values, in set $K_1$ for serving cell $c$

while $k < \mathcal{C}(K_1)$

if $\mod\left(n_{\mathrm{U}} - K_{1,k} + 1, \max\left(2^{\mu_{\mathrm{UL}} - \mu_{\mathrm{DL}}}, 1\right)\right) = 0$

Set $n_{\mathrm{D}} = 0$ — index of a DL slot within an UL slot

while $n_{\mathrm{D}} < \max\left(2^{\mu_{\mathrm{DL}} - \mu_{\mathrm{UL}}}, 1\right)$

Set $R$ to the set of rows

Set $\mathcal{C}(R)$ to the cardinality of $R$

Set $r = 0$ — index of row in set $R$

if slot $n_{\mathrm{U}}$ starts at a same time as or after a slot for an active DL BWP change on serving cell $c$ or an active UL BWP change on the PCell and slot $\left\lfloor \left(n_{\mathrm{U}} - K_{1,k}\right) \cdot 2^{\mu_{\mathrm{DL}} - \mu_{\mathrm{UL}}} \right\rfloor + n_{\mathrm{D}}$ is before the slot for the active DL BWP change on serving cell $c$ or the active UL BWP change on the PCell

continue;

else

while $r < \mathcal{C}(R)$

if the UE is provided *TDD-UL-DL-ConfigurationCommon*, or *TDD-UL-DL-ConfigDedicated* and, for each slot from slot $\left\lfloor \left(n_{\mathrm{U}} - K_{1,k}\right) \cdot 2^{\mu_{\mathrm{DL}} - \mu_{\mathrm{UL}}} \right\rfloor + n_{\mathrm{D}} - N_{\mathrm{PDSCH}}^{\mathrm{repeat}} + 1$ to slot $\left\lfloor \left(n_{\mathrm{U}} - K_{1,k}\right) \cdot 2^{\mu_{\mathrm{DL}} - \mu_{\mathrm{UL}}} \right\rfloor + n_{\mathrm{D}}$, at least one symbol of the PDSCH time resource derived by row $r$ is configured as UL where $K_{1,k}$ is the $k$-th slot timing value in set $K_1$,

$R = R \backslash r$;

end if

$r = r + 1$;

end while

if the UE does not indicate a capability to receive more than one unicast PDSCH per slot and $R \neq \varnothing$,

$M_{A,c} = M_{A,c} \cup j$;

$j = j + 1$;

The UE does not expect to receive SPS PDSCH release and unicast PDSCH in a same slot;

else

Set $\mathcal{C}(R)$ to the cardinality of $R$

Set $m$ to the smallest last OFDM symbol index, as determined by the *SLIV*, among all rows of $R$

while $R \neq \varnothing$

Set $r = 0$

while $r < \mathcal{C}(R)$

if $S \leq m$ for start OFDM symbol index $S$ for row $r$

$b_{r,k,n_D} = j$ ; - index of occasion for candidate PDSCH reception or SPS PDSCH release associated with row $r$

$R = R \backslash r$ ;

$B = B \bigcup b_{r,k,n_D}$ ;

end if

$r = r + 1$ ;

end while

$M_{A,c} = M_{A,c} \bigcup j$ ;

$j = j + 1$ ;

Set $m$ to the smallest last OFDM symbol index among all rows of $R$ ;

end while

end if

end if

$n_D = n_D + 1$ ;

end while

end if

$k = k + 1$ ;

end while

[End of pseudo-code 2]

In pseudo-code 2, a location in a HARQ-ACK codebook at which HARQ-ACK information for DCI indicating a DL SPS release is included is determined based on a location at which a DL SPS PDSCH is received. For example, when a DL SPS PDSCH starts from a fourth OFDM symbol from a beginning of a slot and has a length of five symbols, HARQ-ACK information including a DL SPS release indicating release of the SPS is determined by assuming that a PDSCH starting from the fourth OFDM symbol of a slot in which the DL SPS release is transmitted and having a length of five symbols is mapped. Further, the corresponding HARQ-ACK information is determined based on a PDSCH-to-HARQ timing indicator and a PUCCH resource indicator included in control information indicating the DL SPS release. As another example, when a DL SPS PDSCH starts from a fourth OFDM symbol from a beginning of a slot and has a length of five symbols, HARQ-ACK information including a DL SPS release indicating release of the SPS is determined by assuming that a PDSCH starting from the fourth OFDM symbol of a slot and having a length of five symbols is mapped, as indicated by time domain resource allocation (TDRA) of DCI indicating the DL SPS release. Further, the corresponding HARQ-ACK information is determined based on a PDSCH-to-HARQ timing indicator and a PUCCH resource indicator included in control information indicating the DL SPS release.

Hereinafter, a method of generating a Type 2 (dynamic) codebook for reporting HARQ-ACK will be described.

A UE transmits HARQ-ACK information on one PUCCH in a slot n for PDSCH reception or SPS PDSCH release, based on a PDSCH-to-HARQ_feedback timing value for PUCCH transmission of the HARQ-ACK information in the slot n and K0, which is the transmission slot position information of a PDSCH scheduled by DCI format 1_0 or 1_1. Specifically, for the above-described HARQ-ACK information transmission, the UE determines a HARQ-ACK codebook for the PUCCH transmitted in a slot determined by the PDSCH-to-HARQ_feedback timing and K0, based on a DAI included in DCI indicating a PDSCH or an SPS PDSCH release.

The DAI includes a counter DAI and a total DAI. The counter DAI is information indicating a location in a HARQ-ACK codebook corresponding to HARQ-ACK information associated with a PDSCH scheduled by DCI format 1_0 or DCI format 1_1. Specifically, a value of the counter DAI in DCI format 1_0 or 1_1 indicates an accumulated value of the number of PDSCH receptions or SPS PDSCH releases scheduled by DCI format 1_0 or 1_1 in a specific cell c. The accumulated value described above is configured based on a PDCCH monitoring occasion at which the corresponding DCI exists and a serving cell.

The total DAI is a value indicating a size of a HARQ-ACK codebook. Specifically, a value of total DAI represents a total number of PDSCHs or SPS PDSCH releases that have been scheduled prior to and including a time point at which a DCI is scheduled. In addition, the total DAI is a parameter used in a carrier aggregation (CA) scenario in which HARQ-ACK information in a serving cell c includes HARQ-ACK information for PDSCHs scheduled in other cells including the serving cell c. In other words, there is no total DAI parameter in a system operating as a single cell.

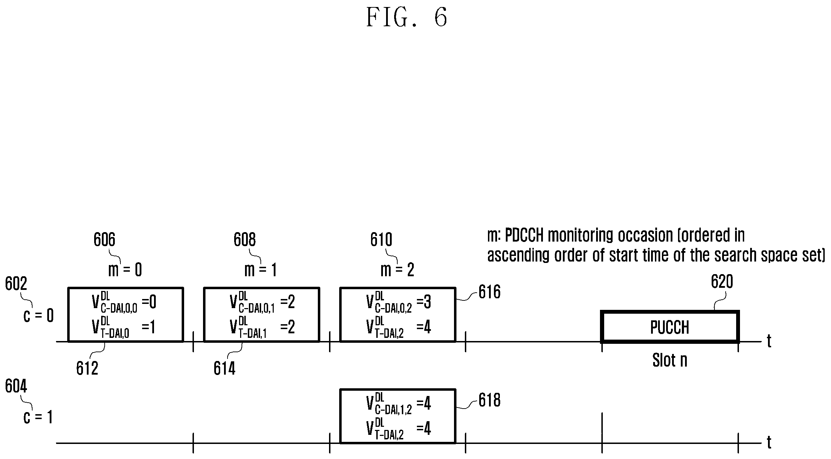

An example of an operation related to the DAI is illustrated in FIG. 6.

FIG. 6 illustrates an example of a process in which a UE generates a Type-2 (dynamic) HARQ-ACK codebook in a 5G system.

In FIG. 6, when the UE configured with two carriers transmits, in an n-th slot of carrier 0 602, a HARQ-ACK codebook selected based on the DAI to a PUCCH 620, changes in value of a counter DAI (C-DAI) and a total DAI (T-DAI) indicated by DCI discovered at each PDCCH monitoring occasion configured for each carrier are shown. First, DCI discovered at m=0 606 indicates that both a C-DAI and a T-DAI have a value of 1 (indicated by reference numeral 612). DCI discovered at m=1 608 indicates that both a C-DAI and a T-DAI have a value of 2 (indicated by reference numeral 614). DCI discovered at m=2 610 in carrier 0 (c=0, 602) indicates a C-DAI value of 3 (indicated by reference numeral 616). DCI discovered at m=2 610 in carrier 1 (c=1, 604) indicates a C-DAI value of 4 (indicated by reference numeral 618). In this case, when carriers 0 and 1 are scheduled at a same monitoring occasion, the T-DAI is indicated as 4 for both carriers.

In FIGS. 5 and 6, the determining OF the HARQ-ACK codebook is performed under a condition that only one PUCCH carrying HARQ-ACK information is transmitted in one slot. This is referred to as mode 1. As an example of a method for determining one PUCCH transmission resource in one slot, when PDSCHs scheduled by different DCIs are multiplexed and transmitted in the same slot using one HARQ-ACK codebook, a PUCCH resource selected for HARQ-ACK transmission is determined as a PUCCH resource indicated by a PUCCH resource indicator field in DCI that schedules a last PDSCH. That is, a PUCCH resource indicated by a PUCCH resource indicator field in DCI scheduled before the DCI is ignored.

Mode 2 refers to a case in which two or more PUCCHs carrying HARQ-ACK information may be transmitted in one slot. A UE may operate only in mode 1 (only one HARQ-ACK PUCCH is transmitted in one slot) or only in mode 2 (one or more HARQ-ACK PUCCHs are transmitted in one slot). Alternatively, a UE supporting both mode 1 and mode 2 may be configured to operate in only one mode by a base station through higher-layer signaling, or mode 1 and mode 2 may be implicitly determined by a DCI format, an RNTI, a DCI-specific field value, scrambling, and the like. For example, PDSCHs scheduled by DCI format A and the associated HARQ-ACK information are based on mode 1, whereas PDSCHs scheduled by DCI format B and the associated HARQ-ACK information are based on mode 2. Whether the HARQ-ACK codebook described above is semi-static or dynamic is determined by an RRC signal.

Hereinafter, a multimedia broadcast and multicast service (MBMS) operation is described. An NR system enables efficient transfer of multicast/broadcast services (MBS). In order to provide a broadcast communication service, the same service and the same specific content data are simultaneously provided to all UEs in a geographical area. The broadcast communication service is transferred to the UE by using a broadcast session. A UE may receive the broadcast communication service in the RRC_IDLE, RRC_INACTIVE, and RRC _CONNECTED states.

For a multicast communication service, the same service and the same specific content data are provided to a specific group of UEs at the same time. The multicast communication service is provided to the UE by using a multicast session. A UE may receive the multicast communication service in an RRC_CONNECTED state via mechanisms such as point-to-point (PTP) and/or point-to-multi point (PTM) transfer. HARQ feedback/retransmission may be applied to both PTP and PTM transmissions.

Logical channels used for MBS transfer are as follows.

- MTCH: a PTM downlink channel for transmitting MBS data of either a multicast session or a broadcast session from a network to a UE.
- DTCH: a PTP channel for transmitting MBS data of a multicast session from a network to a UE.
- MCCH: a PTM downlink channel used in a network to transmit MBS broadcast control information associated with one or multiple MTCH(s) to the UE.

The following connections exist between logical channels for PTM transmission and a transport channel.

- The MCCH may be mapped to a DL-SCH.
- The MTCH may be mapped to a DL-SCH.

The RNTI for PTM transmission is as follows.

- A UE may receive another service by using the same or a different G-RNTIs.
- A UE may receive different services by using the same or different G-CS-RNTIs.

A common frequency resource (CFR) configured by an RRCReconfiguration message is defined, for multicast scheduling, as a UE-specific "MBS frequency domain" having a plurality of contiguous PRBs limited to the same number as a DL BWP, and multicast scheduling may have a specific, separate configuration. For example, a base station may provide, to the corresponding UE, configurations for a PDCCH, a PDSCH, and an SPS that are different from those for unicast scheduling. Two HARQ-ACK reporting modes are defined for MBS.

- In the case of a first HARQ-ACK reporting mode (hereinafter, a first HARQ-ACK mode), when a UE correctly decodes a transport block (TB) or detects a DCI format indicating an SPS PDSCH release, the UE generates HARQ-ACK information having an ACK value, and otherwise generates HARQ-ACK information having a NACK value.
- In the case of a second HARQ-ACK reporting mode (hereinafter, a second HARQ-ACK mode), the UE does not transmit a PUCCH including only HARQ-ACK information having an ACK value. Alternatively, the UE transmits a PUCCH including HARQ-ACK information having at least one NACK value.

HARQ-ACK feedback regarding multicast may be activated or deactivated by higher-layer configuration or indication for each G-RNTI or G-CS-RNTI in DCI scheduling multicast transmission.

Hereinafter, characteristics of satellite communication (non-terrestrial network (NTN), hereinafter interchangeably referred to as a non-terrestrial network) will be described. Satellites for communication may be classified, according to their orbits, into low earth orbit (LEO) satellites, middle earth orbit (MEO) satellites, geostationary earth orbit (GEO) satellites, and the like. In general, a GEO satellite may refer to a satellite at an altitude of approximately 36,000 km, a MEO satellite may refer to a satellite at an altitude of 5000 to 15000 km, and a LEO satellite may refer to a satellite at an altitude of 500 to 1000 km. However, the disclosure is not limited to these examples. An orbital period of a satellite around the earth varies depending on an altitude of each satellite. For example, a GEO satellite has an orbital period of approximately 24 hours, a MEO satellite has an orbital period of approximately 6 hours, and a LEO satellite has an orbital period of approximately 90 to 120 minutes. A low earth orbit satellite (e.g., approximately 2,000 km or less) may have advantages, compared to a geostationary earth orbit satellite (36,000 km), in terms of propagation delay (which may be understood as a time required for a signal transmitted from a transmitter to reach a receiver) and path loss, due to a relatively lower altitude.

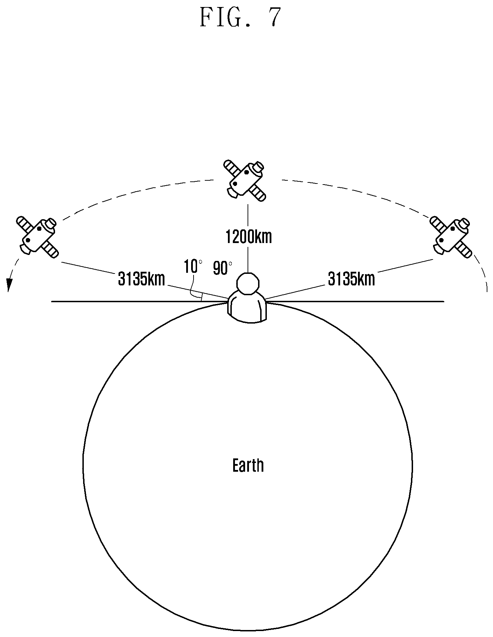

FIG. 7 illustrates an example of an orbital period of a communication satellite according to an altitude or height of the satellite according to an embodiment of the disclosure. It is assumed that a UE communicates with a satellite located at an altitude of 1200 km, and a distance between the UE and the satellite may vary depending on an elevation angle between the satellite and the UE. For example, when the elevation angle between the satellite and the UE is 90 degrees, the distance between the UE and the satellite is 1200 km. However, when the elevation angle between the satellite and the UE is 10 degrees, the distance between the UE and the satellite is approximately 3135 km. Therefore, in satellite communication, even when the UE is fixed, a distance between the satellite and the UE may be variable due to a satellite that periodically orbits the earth, such as a low-earth orbit satellite.

Hereinafter, scheduling in satellite communications will be described. As in a terrestrial network, in a non-terrestrial network, a base station or a satellite transmits downlink signals to a UE and receives uplink signals from the UE. Types of downlink signals include a PDCCH and a PDSCH, and uplink signals may include a PUCCH and a PUSCH. For example, when a base station transmits a PDSCH to a UE in slot n, the UE may transmit, to the base station in slot (n+k1), a PUCCH including HARQ-ACK information indicating whether decoding of the PDSCH has been successful. As another example, when a base station transmits a PDCCH to a UE in slot n and the PDCCH includes uplink scheduling information, the UE may transmit a PUSCH to the base station through a corresponding resource (slot (n+k2)). A value of k1 or k2 represents a scheduling offset (or a slot offset) between a downlink reception slot and an uplink transmission slot. The scheduling offset exists because the UE requires time to process a downlink signal received from the base station and to prepare an uplink signal to be transmitted to the base station. Accordingly, such a scheduling offset is required not only in a non-terrestrial network but also in a terrestrial network. However, compared to the terrestrial network, the non-terrestrial network may require a larger scheduling offset due to a longer propagation delay caused by a long distance between the UE and a satellite.

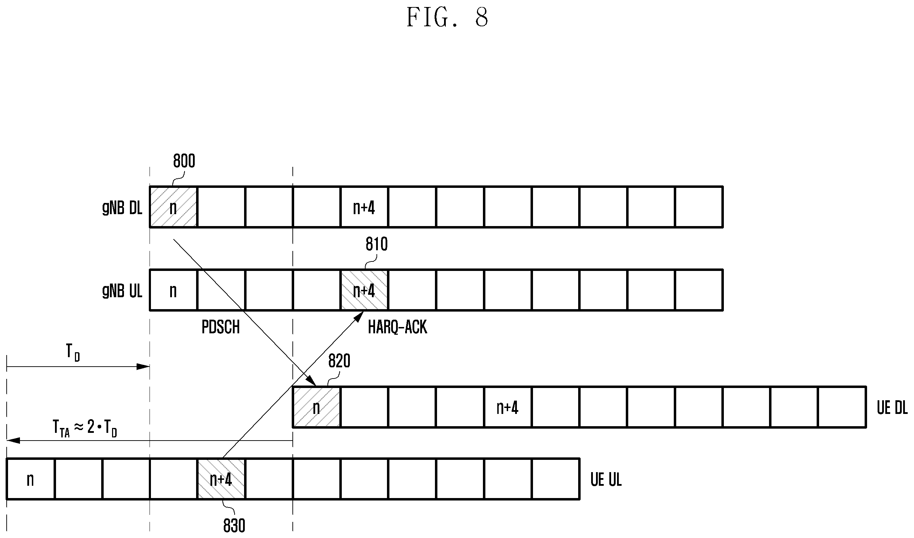

FIG. 8 illustrates an example of a process of information transmission/reception between a satellite and a UE in a non-terrestrial network according to an embodiment.

In FIG. 8, it is assumed that a base station is scheduled to transmit a PDSCH in slot n 800 and to receive corresponding HARQ-ACK information in slot (n+4) 810. The UE may receive the PDSCH in slot n 820 after a long delay time. However, slot (n+4) 830, in which the base station has requested HARQ-ACK feedback, is located in a slot that is much earlier than the downlink from a UE perspective due to a timing advance (TA) applied to the UE. Accordingly, a situation may occur in which the UE transmits HARQ-ACK information before receiving the PDSCH.

The reason the UE applies a TA during uplink transmission is to align the timing of uplink signals received from different UEs at the base station. If the UE transmits the uplink signal individually in synchronization with a downlink resource of the UE without applying the TA, the base station may need to search for the uplink signal without prior knowledge of a reception timing of the uplink signal from each UE, which imposes an additional processing burden. However, compared to a terrestrial network, a non-terrestrial network has a much wider range of TA values to be applied. Accordingly, if the base station does not sufficiently provide an offset value between a slot in which a PDSCH is transmitted/received and a slot in which HARQ-ACK information is transmitted/received, a problem such as that illustrated in FIG. 8 may occur.

Accordingly, to solve such a problem, a non-terrestrial network provides a separate offset in addition to a scheduling offset provided in a terrestrial network. A transmission timing of an uplink signal associated with a downlink signal of a UE may be defined as $(n + k + k_{offset})$, where n denotes a slot in which the UE has received the downlink signal. A value of k is a value indicated by at least one of higher-layer signaling or L1 signaling, or a combination thereof. Th value k is a parameter that may be commonly applied to both the terrestrial network and the non-terrestrial network. The parameter $k_{offset}$ is applied only in the non-terrestrial network, and is defined as $k_{offset} = k_{cell,offset} - k_{UE,offset}$. The parameter $k_{cell,offset}$ is a cell-common parameter included in a SIB and transferred to UEs in a cell. The value $k_{cell,offset}$ is configured by a base station in consideration of a maximum delay time among a ground station, a satellite, and a UE. The parameter $k_{UE,offset}$ is a UE-specific parameter included in an MAC CE and transferred to a specific UE. The parameter $k_{UE,offset}$ is configured in consideration of the fact that a delay time between a satellite and a UE may differ among UEs even if they are in the same cell. The parameter $k_{cell,offset}$ may be applied, as illustrated in FIG. 8, to a case in which a downlink signal is a PDSCH and an uplink signal is a PUCCH or PUSCH including HARQ-ACK information. In addition, the parameter $k_{UE,offset}$ may also be applied in the following other cases.

- PUSCH scheduling as an uplink signal for a downlink signal RAR
- Message 3 retransmission as an uplink signal for a downlink signal of DCI format 0_0 with a CRC scrambled by a TC-RNTI
- HARQ-ACK PUCCH as an uplink signal for a downlink signal contention resolution PDSCH (Message 4)
- Message B PUSCH as an uplink signal for a downlink signal Message A PDSCH

In the following description of the disclosure, higher layer signaling may refer to signaling corresponding to at least one signaling among the following signaling, or a combination of one or more thereof.

- MIB
- SIB or SIB X (X=1, 2,...)
- RRC
- Medium access control (MAC) control element (CE)

In addition, L1 signaling may refer to signaling corresponding to at least one signaling method among signaling methods using the following physical layer channels or signaling, or a combination of one or more thereof.

- PDCCH
- DCI

- UE-specific DCI
- Group common DCI
- Common DCI

Scheduling DCI (for example, DCI used for the purpose of scheduling downlink or uplink data)

- Non-scheduling DCI (for example, DCI not used for the purpose of scheduling downlink or uplink data)
- PUCCH
- Uplink control information (UCI)

In addition, in various embodiments of the disclosure, the term TA may be interchangeably used with terms such as TA information, TA value, or TA index.

In various embodiments of the disclosure, a signal transmitted by a base station to a UE may be referred to as a first signal, and an uplink signal associated with the first signal may be referred to as a second signal. For example, the first signal may include DCI, a UL grant, a PDCCH, a PDSCH, or an RAR, and the second signal associated with the first signal may include a PUCCH, a PUSCH, or msg 3.

In addition, there may be an association between the first signal and the second signal. For example, when a first signal is a PDCCH including a UL grant for uplink data scheduling, a second signal corresponding to the first signal may be a PUSCH including uplink data. Meanwhile, a difference (gap) between time points at which the first signal and the second signal are transmitted/received may be a value predetermined between a UE and a base station. In contrast, the time difference between when the time points at which the first signal and the second signal are transmitted/ received may be determined by a value indicated by the base station or transferred by higher-layer signaling.

<First Embodiment: Scheduling Offset>

It is possible to transmit the same data to a plurality of UEs through a multicast service via satellite communication. For example, when transmitting a disaster or emergency message limited to a specific region, use of multicast may allow a base station to use radio resource more efficiently than unicast.

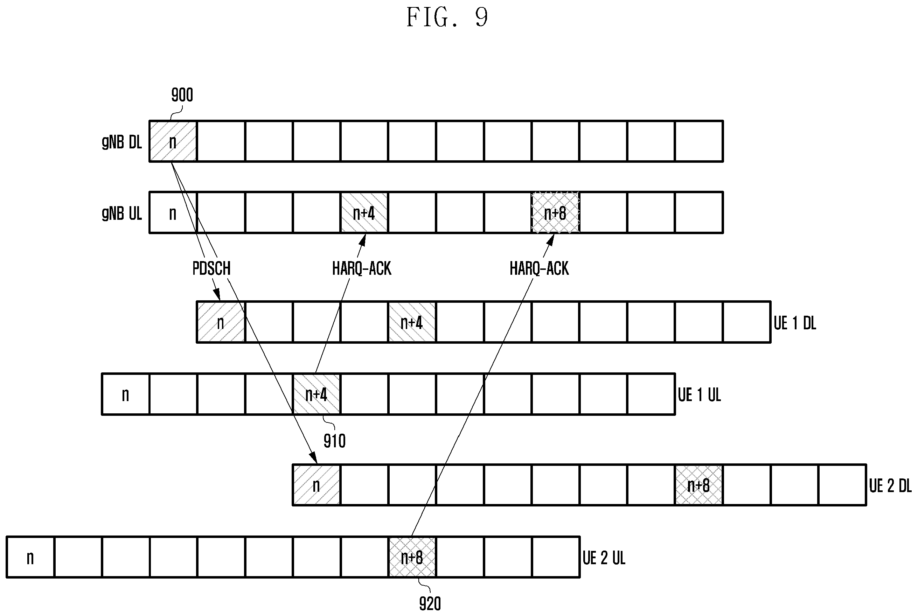

FIG. 9 illustrates an example in which a plurality of UEs receive a multicast PDSCH in satellite communication according to an embodiment of the disclosure and transmit HARQ-ACK feedback therefor.

Referring to FIG. 9, a base station may transmit a multicast PDSCH in slot n 900, and a case may occur in which UEs transmit HARQ-ACK feedback for the multicast PDSCH in different slots. For example, although a value of k is the same and configured as 2, koffset value configured for UE 1 may be 2, and a koffset value configured for UE 2 may be 6. In this case, UE 1 may transmit a HARQ-ACK for the multicast PDSCH in slot (n+4) 910, and UE 2 may transmit a HARQ-ACK for the multicast PDSCH in slot (n+8) 920. Accordingly, from a perspective of the base station, although the same PDSCH is transmitted in slot n, the base station may need to receive PUCCHs or PUSCHs including the HARQ-ACK information transmitted by UEs through different time resources, which may result in an increase in the reception complexity. The HARQ-ACK feedback described above may be feedback according to a first HARQ-ACK mode or a second HARQ-ACK mode.

Therefore, it is possible that UE having received a multicast PDSCH transmits a PUCCH or PUSCH including HARQ-ACK information in the same slot through at least one of the following methods or a combination of some of the methods.

- Method 1: $k_{UE,offset}$ (or UE-specific offset) is not applied to a DCI format for scheduling a multicast PDSCH. For example, when DCI formats 4_1 and 4_2 are DCI formats for scheduling a multicast PDSCH, a UE may receive a PDSCH scheduled through the corresponding DCI format in slot n, and may transmit a corresponding HARQ-ACK in slot $(n + k + k_{cell,offset})$. In addition, when a UE has received DCI format 1_0 or 1_1 (which is a DCI format for scheduling a unicast PDSCH), the UE may receive a PDSCH in slot n through the corresponding DCI format, and transmission of a corresponding HARQ-ACK may be performed in slot $(n + k + k_{cell,offset} - k_{UE,offset})$. In other words, the UE may determine whether to apply $k_{UE,offset}$ based on whether a received DCI format schedules a multicast PDSCH or a unicast PDSCH.

As another example, when DCI format 4_1 and 4_2 are DCI formats for scheduling a multicast PDSCH, the UE may receive a PDSCH in slot n through the corresponding DCI format, and may transmit HARQ-ACKs therefor only in slot $(n + k + k_{cell,offset})$ when the second HARQ-ACK mode (or a reporting mode in which a NACK is fed back) is configured. If the first HARQ-ACK transmission mode is configured, in case that DCI format 4_1 and 4_2 are DCI formats for scheduling a multicast PDSCH, the UE may receive a PDSCH in slot n through the corresponding DCI format, and may transmit HARQ-ACKs therefor in slot $(n + k + k_{cell,offset} - k_{UE,offset})$.

- Method 2: The UE may apply $k_{UE,offset}$ to a DCI format for scheduling a unicast PDSCH, and separately apply $k_{group,offset}$ to a DCI format for scheduling a multicast PDSCH. For example, when DCI formats 4_1 and 4_2 are DCI formats for scheduling a multicast PDSCH, the UE may receive the PDSCH scheduled through the corresponding DCI format in slot n, and may transmit an HARQ-ACK therefor in slot $(n + k + k_{cell,offset} - k_{group,offset})$. In addition, when the UE receives DCI format 1_0 and 1_1 (which is a DCI format for scheduling a unicast PDSCH), the UE may receive the PDSCH scheduled through the corresponding DCI format in slot n, and transmit the corresponding HARQ-ACK in slot $(n + k + k_{cell,offset} - k_{UE,offset})$. The value of $k_{group,offset}$ may be configured by a higher-layer signal such as RRC or MAC CE, or may be determined by an L1 signal. In other words, the UE may determine whether to apply $k_{group,offset}$ or $k_{UE,offset}$ according to whether the received DCI format schedules a multicast PDSCH or a unicast PDSCH.

As another example, when DCI formats 4_1 and 4_2 are DCI formats for scheduling a multicast PDSCH, the UE may receive a PDSCH scheduled through the corresponding DCI format in slot n, and when the second HARQ-ACK mode (or a reporting mode in which a NACK is fed back) is configured, a HARQ-ACK therefor may be transmitted in slot $(n + k + k_{cell,offset} - k_{group,offset})$. If the first HARQ-ACK transmission mode is configured, in the case where DCI formats 4_1 and 4_2 are DCI formats for scheduling a multicast PDSCH, the UE may receive the PDSCH scheduled through the corresponding DCI format in slot n, and transmit the corresponding HARQ-ACK in slot $(n + k + k_{cell,offset} - k_{UE,offset})$.

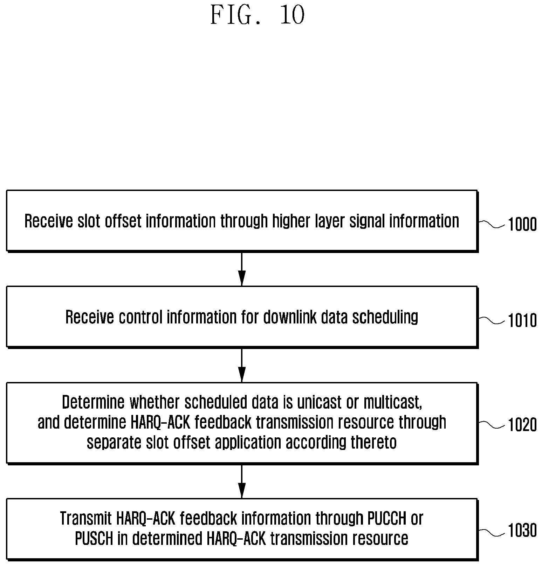

FIG. 10 illustrates an example of a method in which a UE determines an uplink signal transmission slot according to reception of a downlink signal, according to an embodiment of the disclosure.

The UE receives at least one of $k_{cell,offset}$, $k_{UE,offset}$, or $k_{group,offset}$ information through higher-layer signal information (operation 1000). The higher-layer signal information may include information such as RRC or a MAC CE. Thereafter, the UE receives control information for downlink data scheduling (operation 1010), and according to whether the scheduled downlink data is a unicast PDSCH or a multicast PDSCH, the UE applies a different slot offset value by applying at least one of the above-described methods, and determines an HARQ-ACK feedback transmission resource for reporting a reception result to the corresponding PDSCH (operation 1020). The UE transmits the HARQ-ACK feedback information through the PUCCH or PUSCH in the determined HARQ-ACK feedback transmission resource (operation 1030).

The flowchart described above illustrates an exemplary method which may be implemented according to the principles of the disclosure, and various changes may be made to the methods illustrated in the flowcharts in the specification. For example, although shown as a series of operations, the various operations in each drawing may overlap, occur in parallel, occur in a different order, or occur multiple times. In another example, an operation may be omitted or replaced by other operations.

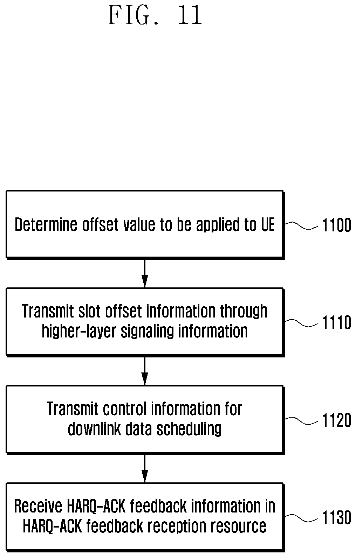

FIG. 11 illustrates an example of a method in which a base station determines an uplink signal reception slot according to reception of a downlink signal, according to an embodiment of the disclosure.

The base station determines an offset value to be applied to a UE according to one of the methods described above (operation 1100). The offset value may correspond to at least one of kcell,offset, kUE,offset, or kgroup,offset information. The base station transmits the offset value to the UE through the higher-layer signal information (operation 1110). The higher-layer signal information may include information such as RRC or MAC CE. Thereafter, the base station transmits control information for scheduling of downlink data to the UE (operation 1120), and receives HARQ-ACK feedback information from the UE in a HARQ-ACK feedback transmission resource related to whether the scheduled downlink data is a unicast PDSCH or a multicast PDSCH (operation 1130). The HARQ-ACK feedback transmission resource is related to a slot offset value to which at least one of the above-described methods is applied, depending on whether the downlink data is a unicast PDSCH or a multicast PDSCH.

The above-described flowcharts illustrate exemplary methods that may be implemented in accordance with the principles of the disclosure, and various changes may be made to the methods illustrated in the flowcharts in the specification. For example, although illustrated as a series of operations, the various operations of each drawing may overlap, occur in parallel, occur in a different order, or occur multiple times. In another example, operations may be omitted or replaced by other operations.

<Second Embodiment: Whether to Report HARQ-ACK>

In satellite communications, due to a long delay time caused by a long distance among a ground station, a satellite, and a UE, a base station has a disadvantage in that a time required to transmit a PDSCH to the UE and receive corresponding HARQ-ACK information is greater than that in a terrestrial network. Accordingly, rather than determining whether to perform retransmission based on HARQ-ACK information corresponding to the PDSCH, the base station may improve data transmission reliability within a shorter delay time by employing a technique such as PDSCH repetition transmission from the beginning, without receiving HARQ-ACK information.

Accordingly, in satellite communication, a method may be possible in which whether to transmit HARQ-ACK information is determined based on a HARQ process ID value included in a DCI format for scheduling a PDSCH. For example, the base station may inform a UE in advance, via a higher-layer signal downlinkHARQ-FeedbackDisabled, whether transmission of HARQ-ACK information is required or not required for a specific HARQ process ID. The higher-layer signal downlinkHARQ-FeedbackDisabled may be configured as a 16-bit string when a HARQ process ID is represented by 4 bits, and may be configured as a 32-bit string when a HARQ process ID is represented by 5 bits. Alternatively, regardless of a number of HARQ process ID bits, the higher-layer signal downlinkHARQ-FeedbackDisabled may be configured as a 32-bit string, and it may be determined that a first 2k bits are applied to HARQ processes according to a number of HARQ process ID bits (k).

If the higher-layer signal downlinkHARQ-FeedbackDisabled having a value of {100000000000000...} is provided to a UE, the UE may not report HARQ-ACK information for a PDSCH scheduled by a DCI format when a HARQ process ID value included in the DCI format is 0. Each bit may be mapped to a respective HARQ process IDs, and the HARQ process IDs may be mapped to the bits in ascending order of the HARQ process IDs. When a bit corresponding to a specific HARQ process ID in downlinkHARQ-FeedbackDisabled is configured as 1, it may indicate that HARQ-ACK information corresponding to a PDSCH associated with the specific HARQ process ID is not to be reported.

When the HARQ-ACK feedback is not reported, specific operations may vary depending on a HARQ-ACK codebook type. When the HARQ-ACK codebook type is a Type 1 HARQ-ACK codebook, the UE may map a NACK (or ACK) to a HARQ-ACK codebook position corresponding to the PDSCH regardless of whether decoding of the PDSCH is successful, and transmit the HARQ-ACK codebook on a PUCCH or a PUSCH. When the HARQ-ACK codebook type is a Type 2 HARQ-ACK codebook, the UE may not generate HARQ-ACK information corresponding to the PDSCH (in which case, HARQ-ACK information for the PDSCH is not included in the HARQ-ACK codebook), or may not multiplex the HARQ-ACK information onto a corresponding PUCCH or PUSCH resource (e.g., when the UE receives only PDSCHs for which HARQ-ACK feedback is not required, no HARQ-ACK codebook may be generated). When a HARQ process ID value included in the DCI format is a value other than 0, the UE may, in both the Type 1 HARQ-ACK codebook and the Type 2 HARQ-ACK codebook, map HARQ-ACK information corresponding to a PDSCH scheduled by the DCI format to ACK or NACK, multiplex the same onto a PUCCH or PUSCH resource, and transmit the same to a base station. This method is hereinafter referred to as a first HARQ-ACK reporting presence/absence determination method.

In the case of multicast data, similarly to broadcast, it may be necessary to transmit only the multicast data without separate HARQ-ACK feedback. This is because resources required to receive HARQ-ACK information for multicast data may increase in proportion to the number of UEs receiving the multicast data. In addition, when a transmission reliability requirement for the multicast data is not high, transmitting only the multicast data without HARQ-ACK feedback may be reasonable. Accordingly, it is possible to add a 1-bit enabling/disabling HARQ-ACK feedback indication field to a DCI format for scheduling multicast data. When a value of the indication field indicates 1 (or 0), the UE may determine that HARQ-ACK feedback is to be reported for multicast data scheduled in the corresponding DCI format. When the value of the indication field indicates 0 (or 1), the UE may determine that no HARQ-ACK feedback is reported for multicast data scheduled in the corresponding DCI format.

When the HARQ-ACK feedback is not reported, specific operations may vary depending on the HARQ-ACK codebook type. When the HARQ-ACK codebook type is a Type 1 HARQ-ACK codebook, a UE may map a NACK (or ACK) to a HARQ-ACK codebook position corresponding to a PDSCH regardless of whether decoding of the PDSCH is successful, and transmit the HARQ-ACK codebook on a PUCCH or a PUSCH. In case that the HARQ-ACK codebook type is a Type 2 HARQ-ACK codebook, the UE may not generate HARQ-ACK information corresponding to the PDSCH (in this case, HARQ-ACK information for the PDSCH is not included in the HARQ-ACK codebook), or may not multiplex HARQ-ACK information onto a corresponding PUCCH or PUSCH resource (e.g., when the UE receives only PDSCHs for which HARQ-ACK feedback is not required, no HARQ-ACK codebook is generated). A 1-bit enabling/disabling HARQ-ACK feedback indication field may be available in case that a separate higher-layer signal harq-FeedbackEnablerMulticast indicates DCI-based HARQ-ACK enabling/disabling. This method is hereinafter referred to as a second HARQ-ACK reporting presence/absence determination method.

Since a method of determining whether to report HARQ-ACK information in satellite communication and a method of determining whether to report HARQ-ACK information in multicast communication are different from each other, it is necessary to determine which of these methods is to be applied in a situation in which satellite communication supports multicast communication. It may be possible to support at least one of the following methods, or a combination of some of the following methods.

* Method 1-1: the first HARQ-ACK reporting presence/absence determination method may be applied to all DCI formats that schedule multicast PDSCHs and unicast PDSCHs. For example, a higher-layer signal downlinkHARQ-FeedbackDisabled may be applied to DCI format 4_1 or DCI format 4_2. Accordingly, a UE may determine whether to report the HARQ-ACK information according to reception of a corresponding multicast PDSCH based on a HARQ process ID provided (or indicated) in DCI format 4_1 or 4_2. Accordingly, in case that a multicast service operates in a terrestrial network band, the UE and a base station may operate based on the second HARQ-ACK reporting presence/absence determination method. On the other hand, in case that the multicast service operates in a non-terrestrial network band, the UE and the base station may operate based on the first HARQ-ACK reporting presence/absence determination method.

Method 1-2: the second HARQ-ACK reporting presence/absence determination method may be applied to both DCI formats that schedule multicast PDSCHs and unicast PDSCHs. For example, an enabling/disabling HARQ-ACK feedback indication field may be applied to DCI format 1_1 or DCI format 1_2. Accordingly, based on the enabling/disabling HARQ-ACK feedback indication field included in DCI format 1_1 or 1_2, a UE may determine whether to report HARQ-ACK information corresponding to reception of a unicast PDSCH, based on a value of the corresponding field. Accordingly, when a UE supports a multicast service in a non-terrestrial network, a base station may apply the second HARQ-ACK reporting presence/absence determination method. On the other hand, when a UE does not support a multicast service in the non-terrestrial network, the base station may apply the first HARQ-ACK reporting presence/absence determination method.

* Method 2-1: It is possible to apply both a first HARQ-ACK reporting presence/absence determination method and a second HARQ-ACK reporting presence/absence determination method. In this case, the following four cases may occur.

- Case 1: A case in which a HARQ process X configured to perform HARQ-ACK reporting is indicated by a higher-layer signal downlinkHARQ-FeedbackDisabled, and an enabling/disabling HARQ-ACK feedback indication field of DCI is indicated (configured) as a HARQ-ACK reporting value
- Case 2: A case in which a HARQ process X configured not to perform HARQ-ACK reporting is indicated by a higher-layer signal downlinkHARQ-FeedbackDisabled, and an enabling/disabling HARQ-ACK feedback indication field of DCI is indicated as A HARQ-ACK non-reporting value
- Case 3: A case in which a HARQ process X configured not to perform HARQ-ACK reporting is indicated by a higher-layer signal downlinkHARQ-FeedbackDisabled, and an enabling/disabling HARQ-ACK feedback indication field of DCI indicates a HARQ-ACK reporting value
- Case 4: A case in which a HARQ process X configured to perform HARQ-ACK reporting is indicated by a higher-layer signal downlinkHARQ-FeedbackDisabled, and an enabling/disabling HARQ-ACK feedback indication field of DCI indicates a HARQ-ACK non-reporting value

Among the above-described cases, case 1 and case 2 indicate that the first and second HARQ-ACK reporting presence/absence determination methods provide the same information, and when multicast communication is supported in satellite communication, only case 1 and case 2 may be allowed. In other words, when method 2-1 is applied, both a base station and a UE may consider only case 1 and case 2 to be allowed, and may regard cases 3 and 4 as error cases. Considering a case as an error case may mean that the base station does not support case 3 and case 4, or that when case 3 and case 4 occur, the UE may determine that the corresponding scheduling information is incorrect and ignore the scheduling information.

Alternatively, in case that case 3 or case 4 occurs, the UE may prioritize the first HARQ-ACK reporting presence/absence determination method or prioritize the second HARQ-ACK reporting presence/absence determination method. Prioritizing the first HARQ-ACK reporting presence/absence determination method means that only the first HARQ-ACK reporting presence/absence determination method is applied, instead of applying the second HARQ-ACK reporting presence/absence determination method. Prioritizing the second HARQ-ACK reporting presence/absence determination method means that only the second HARQ-ACK reporting presence/absence determination method is applied, instead of applying the first HARQ-ACK reporting presence/absence determination method.

Alternatively, for Case 1 to Case 4, when at least one of the first HARQ-ACK reporting presence/absence determination method and the second HARQ-ACK reporting presence/absence determination method provides information indicating that HARQ-ACK reporting is to be performed, the UE may determine that HARQ-ACK feedback for the corresponding multicast PDSCH is to be reported. Alternatively, for Case 1 to Case 4, when at least one of the first HARQ-ACK reporting presence/absence determination method and the second HARQ-ACK reporting presence/absence determination method provides information indicating that HARQ-ACK reporting is not to be performed, the UE may determine that HARQ-ACK feedback for the corresponding multicast PDSCH is not to be reported.

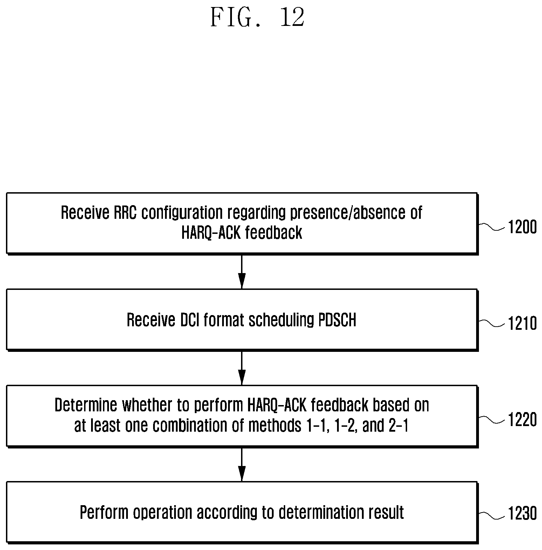

FIG. 12 illustrates an example of an operation in which a UE determines whether to report HARQ-ACK information, according to an embodiment of the disclosure.

The UE receives, from a base station through higher-layer signaling, configuration information indicating whether to report HARQ-ACK information for a PDSCH, wherein the configuration information may include at least one of downlinkHARQ-FeedbackDisabled or harq-FeedbackEnablerMulticast (operation 1200). Thereafter, the UE receives a DCI format for scheduling a PDSCH (operation 1210). The DCI format may be a DCI format supporting multicast communication, and may be DCI format 4_1 or DCI format 4_2. However, the disclosure is not limited to the DCI format described above. The received DCI format may include an enabling/disabling HARQ-ACK feedback indication field. The PDSCH may be a multicast PDSCH, but the disclosure is not limited thereto.

The UE determines whether to provide HARQ-ACK feedback for the scheduled PDSCH by using at least one or a combination of Methods 1-1, 1-2, and 2-1 described above (operation 1220). When the UE determines to provide HARQ-ACK feedback for the scheduled PDSCH, the UE generates HARQ-ACK information for the PDSCH, includes the HARQ-ACK information in a HARQ-ACK codebook, and transmits the HARQ-ACK codebook to the base station on a PUCCH or a PUSCH. When the UE determines not to provide HARQ-ACK feedback for the scheduled PDSCH, the UE may perform operations described above. Alternatively, the UE may regard a configuration according to the higher-layer signaling and the DCI format as an error case, and may, for example, ignore the received DCI format (operation 1230).

The above-described flowchart illustrates an exemplary method that may be implemented in accordance with the principles of the disclosure, and various changes may be made to the method illustrated in the flowchart in the disclosure. For example, although illustrated as a series of operations, various operations of each drawing may be overlapped, may occur in parallel, may occur in a different order, or may occur multiple times. In another example, an operation may be omitted or replaced by other operations.

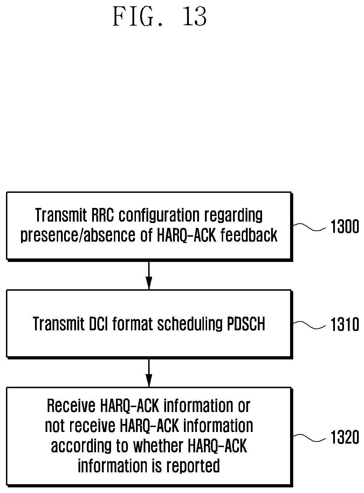

FIG. 13 illustrates an example of an operation of a base station according to whether a UE reports HARQ-ACK information, according to an embodiment of the disclosure.

The base station transmits, to the UE through higher-layer signaling, configuration information indicating whether to report HARQ-ACK information for a PDSCH (operation 1300). The configuration information may include at least one of downlinkHARQ-FeedbackDisabled or harq-FeedbackEnablerMulticast. The configuration information may be based on at least one or a combination of Methods 1-1, 1-2, and 2-1 described above.

Thereafter, the base station transmits a DCI format for scheduling a PDSCH, and transmits the scheduled PDSCH (operation 1310). The DCI format may be a DCI format supporting multicast communication, and may be DCI format 4_1 or 4_2. However, the disclosure is not limited to the DCI formats described above. The received DCI format may include an enabling/disabling HARQ-ACK feedback indication field. The PDSCH may be a multicast PDSCH, but the disclosure is not limited thereto. A configuration of the enabling/disabling HARQ-ACK feedback indication field may be based on at least one or a combination of Methods 1-1, 1-2, and 2-1 described above.

The base station may receive HARQ-ACK information for the PDSCH from the UE, or may not receive the HARQ-ACK information, according to whether the HARQ-ACK information is reported (operation 1320).

The above-described flowcharts illustrate exemplary methods that may be implemented according to the principles of the disclosure, and various changes may be made to the methods illustrated in the flowcharts in the specification. For example, the operations are illustrated as a series of operations, but various operations of each drawing may overlap, occur in parallel, occur in a different order, or occur multiple times. In another example, operations may be omitted or replaced by other operations.

The first and second embodiments described above may be combined to enable operations of a UE and a base station. For example, an uplink signal may be transmitted in a slot determined according to a scheduling offset determined based on the first embodiment. When the uplink signal is HARQ-ACK information, HARQ-ACK information to be fed back may be determined based on the second embodiment.

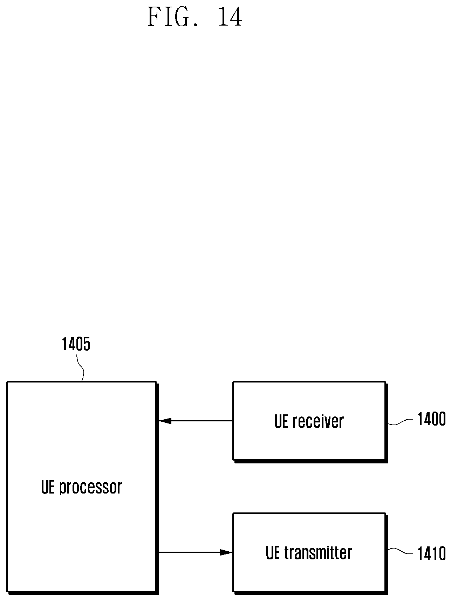

FIG. 14 illustrates a structure of a UE in a wireless communication system according to an embodiment of the disclosure.

Referring to FIG. 14, the UE may include a transceiver, which refers to a UE receiver 1400 and a UE transmitter 1410 as a whole, memory (not illustrated), and a UE processor 1405 (or UE controller or processor). The UE transceiver 1400 and 1410, the memory, and the UE processor 1405 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

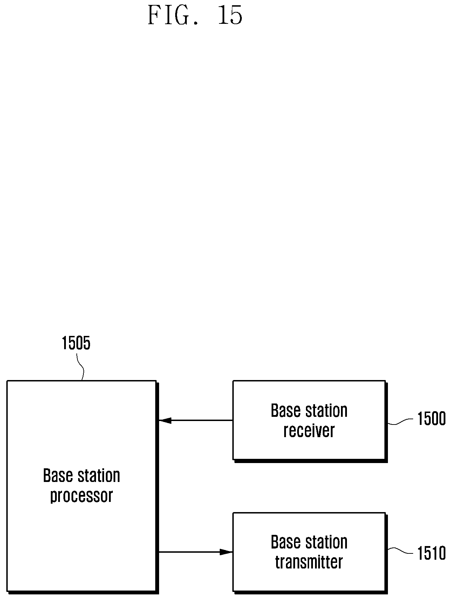

FIG. 15 illustrates a structure of a base station in a wireless communication system according to an embodiment of the disclosure.

Referring to FIG. 15, the base station may include a transceiver, which refers to a base station receiver 1500 and a base station transmitter 1510 as a whole, a memory (not illustrated), and a base station processor 1505 (or base station controller or processor). The base station transceiver 1500 and 1510, the memory, and the base station processor 1505 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a communication system using a non-terrestrial network, the method comprising:

   receiving cell-specific slot offset information from a base station;
   receiving terminal-specific slot offset information from the base station;
   receiving downlink control information for scheduling downlink data from the base station;
   based on whether the downlink data is multicast data, determining a slot in which hybrid automatic repeat request-acknowledgement (HARQ-ACK) information for the downlink data is to be transmitted; and
   transmitting the HARQ-ACK information in the slot.

2. The method of claim 1, wherein, in case that the downlink data is the multicast data, the slot is determined based on the cell-specific slot offset information, and
   wherein, in case that the downlink data is not the multicast data, the slot is determined based on the cell-specific slot offset information and the terminal-specific slot offset information.

3. The method of claim 1, further comprising receiving group slot offset information from the base station,

   wherein, in case that the downlink data is the multicast data, the slot is determined based on the cell-specific slot offset information and the group slot offset information, and
   wherein, in case that the downlink data is not the multicast data, the slot is determined based on the cell-specific slot offset information and the terminal-specific slot offset information.

4. The method of claim 1, wherein whether the downlink data is the multicast data is determined based on a format of the downlink control information.

5. A method performed by a base station in a communication system using a non-terrestrial network, the method comprising:

   transmitting cell-specific slot offset information to a terminal;
   transmitting terminal-specific slot offset information to the terminal;
   transmitting downlink control information for scheduling downlink data to the terminal; and
   receiving hybrid automatic repeat request-acknowledgement (HARQ-ACK) information for the downlink data in a slot,
   wherein the slot is based on whether the downlink data is multicast data.

6. The method of claim 4, wherein, in case that the downlink data is the multicast data, the slot is based on the cell-specific slot offset information, and
   wherein, in case that the downlink data is not the multicast data, the slot is based on the cell-specific slot offset information and the terminal-specific slot offset information.

7. The method of claim 4, further comprising transmitting group slot offset information to the terminal,

   wherein, in case that the downlink data is the multicast data, the slot is based on the cell-specific slot offset information and the group slot offset information, and

wherein, in case that the downlink data is not the multicast data, the slot is based on the cell-specific slot offset information and the terminal-specific slot offset information.

8. The method of claim 4, wherein whether the downlink data is the multicast data is related to a format of the downlink control information.

9. A terminal in a communication system using a non-terrestrial network, the terminal comprising:

a transceiver; and
a controller configured to
receive cell-specific slot offset information from a base station,
receive terminal-specific slot offset information from the base station,
receive downlink control information for scheduling downlink data from the base station,
based on whether the downlink data is multicast data, determine a slot in which hybrid automatic repeat request-acknowledgement (HARQ-ACK) information for the downlink data is to be transmitted, and
transmit the HARQ-ACK information in the slot.

10. The terminal of claim 9, wherein, in case that the downlink data is the multicast data, the slot is determined based on the cell-specific slot offset information, and

wherein, in case that the downlink data is not the multicast data, the slot is determined based on the cell-specific slot offset information and the terminal-specific slot offset information.

11. The terminal of claim 9, wherein the controller is further configured to receive group slot offset information from the base station,

wherein, in case that the downlink data is the multicast data, the slot is determined based on the cell-specific slot offset information and the group slot offset information, and

wherein, in case that the downlink data is not the multicast data, the slot is determined based on the cell-specific slot offset information and the terminal-specific slot offset information.

12. The terminal of claim 9, wherein whether the downlink data is the multicast data is determined based on a format of the downlink control information.

13. A base station in a communication system using a non-terrestrial network, the base station comprising:

a transceiver; and
a controller configured to
transmit cell-specific slot offset information to a terminal,
transmit terminal-specific slot offset information to the terminal,
transmit downlink control information for scheduling downlink data to the terminal, and
receive hybrid automatic repeat request-acknowledgement (HARQ-ACK) information for the downlink data in a slot,
wherein the slot is based on whether the downlink data is multicast data.

14. The base station of claim 13, wherein, in case that the downlink data is the multicast data, the slot is based on the cell-specific slot offset information, and

wherein, in case that the downlink data is not the multicast data, the slot is based on the cell-specific slot offset information and the terminal-specific slot offset information.

15. The base station of claim 13, wherein the controller is further configured to transmit group slot offset information to the terminal,

wherein. in case that the downlink data is the multicast data, the slot is based on the cell-specific slot offset information and the group slot offset information, and

wherein in case that the downlink data is not the multicast data, the slot is based on the cell-specific slot offset information and the terminal-specific slot offset information.

FIG. 1

One subframe (110)

$N_{symb}^{subframe,\mu}$ OFDM symbols

1 subcarrier (103)

1 OFDM symbols (102)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$k = 0$

$\bar{l} = 0$

$\bar{l} = 14 \cdot 2^{\mu} - 1$

Time

FIG. 2

1 frame (200)

1 subframe
(201)

μ=0
(204)

| 0 | 1 | 2 | 3 | 4 | 5 | 6 | 7 | 8 | 9 |

slot
(202)

μ=1
(205)

| 0 | 1 | 2 | 3 | 4 | 5 | 6 | 7 | 8 | 9 | 10 | 11 | 12 | 13 | 14 | 15 | 16 | 17 | 18 | 19 |

slot
(203)

EP 4 761 441 A1

38

FIG. 3

duration
(304)

Frequecy
resources
(303)

UE bandwidth
part (310)

Frequency

Time

Slot (320)

Control resource set#1 (301)

Control resource set#2 (302)

EP 4 761 441 A1

FIG. 4

1 symbol
[401]

1 PRB
[402]

DMRS
[405]

REG
[403]

CCE
[404]

# FIG. 5

Slot #n (502)    Slot #n+1 (504)    Slot #n+2 (506)    •  •  •    Slot #k (508)

Frequency

Time

FIG. 6

m: PDCCH monitoring occasion (ordered in ascending order of start time of the search space set)

602 c = 0

606 m = 0

$V_{C-DAI,0,0}^{DL} = 0$
$V_{T-DAI,0}^{DL} = 1$

612

608 m = 1

$V_{C-DAI,0,1}^{DL} = 2$
$V_{T-DAI,1}^{DL} = 2$

614

610 m = 2

$V_{C-DAI,0,2}^{DL} = 3$
$V_{T-DAI,2}^{DL} = 4$

616

620

PUCCH

Slot n

t

604 c = 1

$V_{C-DAI,1,2}^{DL} = 4$
$V_{T-DAI,2}^{DL} = 4$

618

t

# FIG. 7

1200km

3135km 10° 90° 3135km

Earth

FIG. 8

EP 4 761 441 A1

# FIG. 9

# FIG. 10

| Receive slot offset information through higher layer signal information | ~1000 |

↓

| Receive control information for downlink data scheduling | ~1010 |

↓

| Determine whether scheduled data is unicast or multicast, and determine HARQ-ACK feedback transmission resource through separate slot offset application according thereto | ~1020 |

↓

| Transmit HARQ-ACK feedback information through PUCCH or PUSCH in determined HARQ-ACK transmission resource | ~1030 |

# FIG. 11

Determine offset value to be applied to UE — 1100

Transmit slot offset information through higher-layer signaling information — 1110

Transmit control information for downlink data scheduling — 1120

Receive HARQ-ACK feedback information in HARQ-ACK feedback reception resource — 1130

# FIG. 12

Receive RRC configuration regarding presence/absence of HARQ-ACK feedback ~ 1200

Receive DCI format scheduling PDSCH ~ 1210

Determine whether to perform HARQ-ACK feedback based on at least one combination of methods 1-1, 1-2, and 2-1 ~ 1220

Perform operation according to determination result ~ 1230

FIG. 13

```
┌─────────────────────────────────────┐
│  Transmit RRC configuration regarding │ ⌇ 1300
│  presence/absence of HARQ-ACK feedback│
└─────────────────────────────────────┘
                   │
                   ▼
┌─────────────────────────────────────┐
│   Transmit DCI format scheduling PDSCH │ ⌇ 1310
└─────────────────────────────────────┘
                   │
                   ▼
┌─────────────────────────────────────┐
│     Receive HARQ-ACK information or   │
│    not receive HARQ-ACK information   │ ⌇ 1320
│   according to whether HARQ-ACK       │
│       information is reported         │
└─────────────────────────────────────┘
```

FIG. 14

1405

UE processor

UE receiver 1400

UE transmitter 1410

FIG. 15

1505

Base station
processor

Base station
receiver 1500

Base station
transmitter 1510

## INTERNATIONAL SEARCH REPORT

| International application No. |
| --- |
| **PCT/KR2024/013152** |

### A. CLASSIFICATION OF SUBJECT MATTER

**H04W 72/30**(2023.01)i; **H04W 72/232**(2023.01)i; **H04W 72/21**(2023.01)i; **H04W 72/231**(2023.01)i;
**H04W 72/0446**(2023.01)i; **H04W 56/00**(2009.01)i; **H04L 1/1812**(2023.01)i; **H04W 84/06**(2009.01)i

According to International Patent Classification (IPC) or to both national classification and IPC

### B. FIELDS SEARCHED

Minimum documentation searched (classification system followed by classification symbols)

H04W 72/30(2023.01); H04B 7/185(2006.01); H04L 1/16(2006.01); H04L 1/18(2006.01); H04L 1/1812(2023.01);
H04L 5/00(2006.01); H04W 72/1273(2023.01); H04W 72/232(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: cell-specific slot offset, UE-specific slot offset, downlink control information, HARQ-ACK, transmission slot, downlink, non-terrestrial network

### C. DOCUMENTS CONSIDERED TO BE RELEVANT

| Category* | Citation of document, with indication, where appropriate, of the relevant passages | Relevant to claim No. |
| --- | --- | --- |
| Y<br><br>A | KR 10-2023-0012662 A (LG ELECTRONICS INC.) 26 January 2023 (2023-01-26)<br>See paragraph [0140]; and claims 1-2. | 1,4-5,8-9,12-13<br><br>2-3,6-7,10-11,14-15 |
| Y | WO 2022-241351 A1 (QUALCOMM INCORPORATED) 17 November 2022 (2022-11-17)<br>See paragraph [0083]; and claims 1-2 and 15. | 1,4-5,8-9,12-13 |
| A | US 2023-0189263 A1 (LG ELECTRONICS INC.) 15 June 2023 (2023-06-15)<br>See paragraphs [0538]-[0575]; and figures 10-11. | 1-15 |
| A | WO 2022-120742 A1 (NEC CORPORATION) 16 June 2022 (2022-06-16)<br>See paragraphs [0052]-[0062]; and claim 1. | 1-15 |
| A | US 2023-0155789 A1 (SAMSUNG ELECTRONICS CO., LTD.) 18 May 2023 (2023-05-18)<br>See paragraphs [0094]-[0098]; and figure 5. | 1-15 |

☐ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **04 December 2024** | **04 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013152**

| Patent document cited in search report | | | Publication date (day/month/year) | Patent family member(s) | | | Publication date (day/month/year) |
|---|---|---|---|---|---|---|---|
| KR | 10-2023-0012662 | A | 26 January 2023 | KR | 10-2024-0127484 | A | 22 August 2024 |
| | | | | US | 2022-0329360 | A1 | 13 October 2022 |
| | | | | WO | 2022-216041 | A1 | 13 October 2022 |
| WO | 2022-241351 | A1 | 17 November 2022 | CN | 117321931 | A | 29 December 2023 |
| | | | | EP | 4338314 | A1 | 20 March 2024 |
| | | | | US | 11895608 | B2 | 06 February 2024 |
| | | | | US | 11997629 | B2 | 28 May 2024 |
| | | | | US | 2022-0369255 | A1 | 17 November 2022 |
| | | | | US | 2022-0369256 | A1 | 17 November 2022 |
| | | | | US | 2023-0397140 | A1 | 07 December 2023 |
| US | 2023-0189263 | A1 | 15 June 2023 | KR | 10-2023-0019207 | A | 07 February 2023 |
| | | | | KR | 10-2584081 | B1 | 05 October 2023 |
| | | | | US | 11956780 | B2 | 09 April 2024 |
| | | | | WO | 2022-240200 | A1 | 17 November 2022 |
| WO | 2022-120742 | A1 | 16 June 2022 | JP | 2023-553105 | A | 20 December 2023 |
| | | | | US | 2024-0048279 | A1 | 08 February 2024 |
| US | 2023-0155789 | A1 | 18 May 2023 | EP | 4374526 | A1 | 29 May 2024 |
| | | | | KR | 10-2024-0087716 | A | 19 June 2024 |
| | | | | WO | 2023-075519 | A1 | 04 May 2023 |

Form PCT/ISA/210 (patent family annex) (July 2022)